(19) Europäisches Patentamt

European Patent Office

Office européen des brevets

(11) **EP 2 800 180 B1**

(12) **EUROPEAN PATENT SPECIFICATION**

(45) Date of publication and mention
of the grant of the patent:
**07.03.2018 Bulletin 2018/10**

(51) Int Cl.:
*H01M 4/86* (2006.01)          *H01M 8/0245* (2016.01)
*H01M 8/1004* (2016.01)          *H01M 8/0234* (2016.01)
*H01M 8/0239* (2016.01)          *H01M 8/1018* (2016.01)

(21) Application number: **12861254.6**

(22) Date of filing: **19.12.2012**

(86) International application number:
**PCT/JP2012/082875**

(87) International publication number:
**WO 2013/099720 (04.07.2013 Gazette 2013/27)**

(54) **GAS DIFFUSION ELECTRODE SUBSTRATE FOR FUEL CELL, MEMBRANE ELECTRODE ASSEMBLY, AND FUEL CELL**

GASDIFFUSIONSELEKTRODENSUBSTRAT FÜR EINE BRENNSTOFFZELLE, MEMBRANELEKTRODENANORDNUNG UND BRENNSTOFFZELLE

SUBSTRAT D'ÉLECTRODE À DIFFUSION DE GAZ POUR PILE À COMBUSTIBLE, ENSEMBLE MEMBRANE ÉLECTRODE ET PILE À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2011 JP 2011283392**

(43) Date of publication of application:
**05.11.2014 Bulletin 2014/45**

(73) Proprietor: **Toray Industries, Inc.**
**Tokyo 103-8666 (JP)**

(72) Inventors:
• **UTSUNOMIYA, Masamichi**
**Otsu-shi**
**Shiga 520-8558 (JP)**
• **KAMAE, Toshiya**
**Otsu-shi**
**Shiga 520-8558 (JP)**

(74) Representative: **Kador & Partner**
**Corneliusstraße 15**
**80469 München (DE)**

(56) References cited:
JP-A- 2006 004 879          JP-A- 2006 324 104
JP-A- 2008 293 937          JP-A- 2009 080 968
KR-A- 20080 054 285          US-A1- 2006 046 926
US-A1- 2007 048 593          US-A1- 2008 274 390

**Description**

TECHNICAL FIELD

The present invention relates to a gas diffusion medium which is suitably used for a fuel cell, particularly for a polymer electrolyte fuel cell. More particularly, the present invention relates to a gas diffusion medium which is excellent in its anti-flooding, anti-plugging and anti-dry-out characteristics and capable of exerting high cell performance across a wide temperature range from low to high temperatures and has excellent mechanical properties, electrical conductivity and thermal conductivity.

BACKGROUND ART

A polymer electrolyte fuel cell in which a hydrogen-containing fuel gas and oxygen-containing oxidizing gas are supplied to an anode and cathode, respectively, and an electromotive force is generated by bipolar electrochemical reaction is generally constituted by sequentially laminating a bipolar plate, a gas diffusion medium, a catalyst layer, an electrolyte membrane, a catalyst layer, a gas diffusion medium and a bipolar plate. The gas diffusion medium is required to have high gas diffusibility for allowing a gas supplied from the bipolar plate to be diffused into the catalyst and high drainage property for draining water generated by electrochemical reaction to the bipolar plate as well as high electrical conductivity for extracting generated electric current, and electrode base materials composed of carbon fibers and the like are widely used.

However, the following problems are known: (1) when such a polymer electrolyte fuel cell is operated at a relatively low temperature of below 70°C in a high current density region, as a result of blockage of the electrode base material by liquid water generated in a large amount and shortage in the fuel gas supply, the cell performance is impaired (this problem is hereinafter referred to as "flooding"); (2) when such a polymer electrolyte fuel cell is operated at a relatively low temperature of below 70°C in a high current density region, as a result of blockage of gas flow channel (hereinafter, referred to as "flow channel") of the bipolar plate by liquid water generated in a large amount and shortage in the fuel gas supply, the cell performance is momentarily impaired (this problem is hereinafter referred to as "plugging"); and (3) when such a polymer electrolyte fuel cell is operated at a relatively high temperature of 80°C or higher, as a result of drying of the electrolyte membrane due to water vapor diffusion and a reduction in the proton conductivity, the cell performance is impaired (this problem is hereinafter referred to as "dry-out"). In order to solve these problems of (1) to (3), various efforts have been made.

Patent Document 1 proposes a gas diffusion medium in which a microporous region composed of a carbon black and a hydrophobic resin is formed on the catalyst layer side of an electrode base material. According to a fuel cell comprising this gas diffusion medium, since the microporous region has a fine pore structure having water repellency, drainage of liquid water to the cathode side is suppressed, so that flooding tends to be inhibited. In addition, since generated water is forced back to the electrolyte membrane side (hereinafter, this phenomenon is referred to as "back-diffusion"), the electrolyte membrane is wetted and the problem of dry-out thus tends to be inhibited.

In Patent Documents 2 and 3, fuel cells comprising a gas diffusion medium in which a microporous region composed of a carbon black and a hydrophobic resin is formed on both sides of an electrode base material are proposed. According to these fuel cells comprising the gas diffusion medium, since the microporous region on the bipolar plate side is smooth and has high water repellency, the flow channel is unlikely to retain liquid water, so that plugging is inhibited. In addition, as a result of facilitation of back-diffusion of generated water by the microporous region formed on the catalyst layer side and inhibition of water vapor diffusion by the microporous region formed on the bipolar plate side, the electrolyte membrane is wetted and the problem of dry-out is thus inhibited.

In Patent Document 4, a gas diffusion medium in which a microporous region composed of a carbon black and a hydrophobic resin is formed on the catalyst layer side of an electrode base material, wherein the microporous region is island-shaped or lattice-shaped, is proposed. According to a fuel cell comprising this gas diffusion medium, a reactant gas can be smoothly supplied to the catalyst layer from voids having no microporous region.

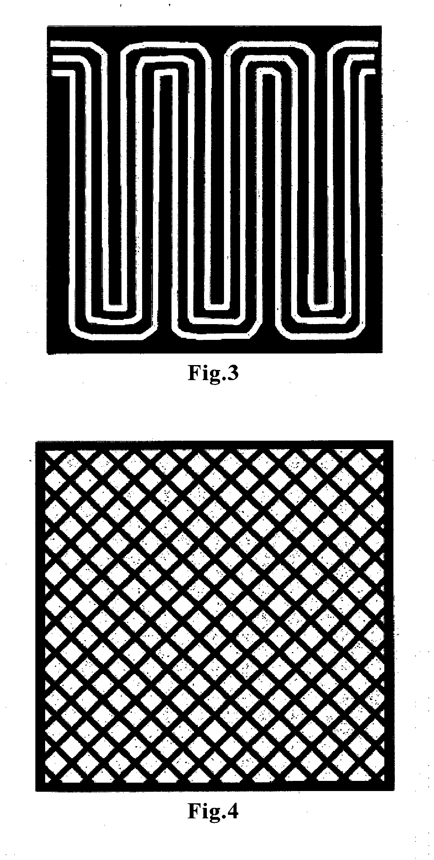

Patent Document 5 discloses a gas diffusion medium which is provided with a patterned microporous region on one side of an electrode base material (Fig. 3). Another gas diffusion medium is also disclosed which is provided with the patterned microporous region on another side of a stratified electrode base material (Fig. 4).

PRIOR ART DOCUMENTS

PATENT DOCUMENTS

[Patent Document 1] JP 2000-123 842A

[Patent Document 2] JP H9-245800A

[Patent Document 3] JP 2008-293937A

[Patent Document 4] JP 2004-164903A

[Patent Document 5] US 2007/048593 A1

SUMMARY OF THE INVENTION

PROBLEMS TO BE SOLVED BY THE INVENTION

However, in the technology according to Patent Document 1, there is a problem that flooding and dry-out are still not adequately inhibited and plugging is not improved at all.

Furthermore, in the technologies according to Patent Documents 2 and 3, there is a problem that prominent flooding occurs because drainage of water from the electrode base material to the bipolar plate is inhibited by the microporous region on the bipolar plate side.

Moreover, the technology according to Patent Document 4 has a problem in that, due to the presence of voids having no microporous region, back-diffusion of generated water is insufficient and dry-out is thus likely to occur. In addition, since the contact surface between the microporous region and the catalyst layer is not smooth, there is also a problem that the contact electrical resistance is increased and the cell performance across low to high temperatures is thus reduced.

As described above, a variety of technologies have been proposed; however, a gas diffusion medium which has excellent anti-flooding and anti-plugging characteristics as well as excellent anti-dry-out characteristic is yet to be discovered.

Therefore, an object of the present invention is to provide a gas diffusion medium which is excellent in its anti-flooding, anti-plugging and anti-dry-out characteristics and capable of exerting high cell performance across a wide temperature range from low to high temperatures and has excellent mechanical properties, electrical conductivity and thermal conductivity.

MEANS FOR SOLVING THE PROBLEMS

The present inventors intensively studied to discover that, in a gas diffusion medium in which a microporous region is formed on both sides of an electrode base material, by controlling the microporous region on one side to have an moderately small areal ratio and the microporous region on the other side to have a large areal ratio, inhibition of drainage from the electrode base material can be prevented and the anti-flooding characteristic can thus be largely improved without impairing the effect of inhibiting plugging and dry-out. By this, it became possible to attain excellent anti-flooding, anti-plugging and anti-dry-out characteristics at the same time, thereby completing the present invention.

Hereinafter, the microporous region on one side of the electrode base material is referred to as "microporous region [A]" and the microporous region on the other side of the electrode base material is referred to as "microporous region [B]".

The gas diffusion medium according to the present invention is characterized by comprising a microporous region [A], an electrode base material and a microporous region [B] that are arranged in the order mentioned, wherein the microporous region [A] has an areal ratio in the range of 20 to 70% and the microporous region [B] has an areal ratio in the range of 80 to 100%, the microporous region [A] and the microporous region [B] comprise hydrophobic resin and carbonaceous powder, wherein the thickness of the electrode base material is 70 to 160 $\mu$m, and the density of the electrode base material is in the range of 0.24 to 0.3 g/cm$^3$. The term "areal ratio" used herein is defined below.

In the prior art, the entirety of both sides of an electrode base material are simply coated with a microporous region. An idea of separately controlling the microporous region on each side to attain anti-flooding, anti-plugging and anti-dry-out characteristics altogether has not been discovered nor can be easily derived.

Further, in the method of producing a gas diffusion medium according to the present invention, the following means is adopted. That is, the method of producing a gas diffusion medium according to the present invention is a method of producing the above-described gas diffusion medium, which method is characterized in that the microporous region [A] is formed by screen printing or gravure printing on the surface of the electrode base material opposite to the surface having the microporous region [B].

In order to solve the above-described problems, the membrane electrode assembly according to the present invention comprises a catalyst layer on both sides of an electrolyte membrane and the above-described gas diffusion medium for a fuel cell on the outer side of the above-described catalyst layers, and the fuel cell according to the present invention comprises a bipolar plate on both sides of the above-described membrane electrode assembly.

That is, the present invention has the following elements.

(1) A gas diffusion medium for a fuel cell, comprising a microporous region [A], an electrode base material and a microporous region [B] that are arranged in the order mentioned, wherein the microporous region [A] has an areal ratio in the range of 20 to 70% and the microporous region [B] has an areal ratio in the range of 80 to 100%, the microporous region [A] and the microporous region [B] comprise hydrophobic resin and carbonaceous powder, wherein the thickness of the electrode base material is 70 to 160 $\mu$m, and the density of the electrode base material is in the range of 0.24 to 0.3 g/cm$^3$. The term "areal ratio" used herein refers to a proportion (%) of the area covered with the respective microporous regions with respect to the area of the electrode base material on one side of the gas diffusion medium , calculated by the following equation:

$$\text{Areal ratio (\%)} = \text{Area covered with microporous region/Area of electrode base material} \times 100.$$

(2) The gas diffusion medium for a fuel cell according to (1), wherein the microporous region [A] forms a pattern, wherein a pattern refers to a design which is repeated within an area of 100 cm$^2$ or smaller.

(3) The gas diffusion medium for a fuel cell according to (1) or (2), wherein the microporous region [A] is composed of an aggregate of linear microporous regions having a mean line width of 0.1 to 5 mm.

(4) The gas diffusion medium for a fuel cell according to any one of (1) to (3), wherein the microporous region [A] is stripe-shaped or lattice-shaped.

(5) A method of producing the gas diffusion medium for a fuel cell according to any one of (1) to (4), wherein the microporous region [A] is formed by screen printing or gravure printing.

(6) A membrane electrode assembly, comprising a catalyst layer on both sides of an electrolyte membrane and a gas diffusion medium on the outer side of the above-described catalyst layers, wherein at least one of the gas diffusion media is the gas diffusion medium according to any one of (1) to (4).

(7) The membrane electrode assembly according to (6), wherein the microporous region [B] of the above-described gas diffusion medium is in contact with the above-described catalyst layer.

(8) A fuel cell, comprising a bipolar plate on both sides of the membrane electrode assembly according to (7).

EFFECTS OF THE INVENTION

The gas diffusion medium according to the present invention comprises a microporous regions [A] and [B]; therefore, it has high anti-plugging and anti-dry-out characteristics. Also, since the areal ratio of the microporous region [A] is in the range of 20 to 70%, the drainage property from the electrode base material is good and the gas diffusion medium thus has high anti-flooding characteristics. Further, since a carbon paper or the like can be used as the electrode base material, the gas diffusion medium according to the present invention also has good mechanical strength, electrical conductivity and thermal conductivity. By using the gas diffusion medium according to the present invention, high cell performance can be exerted across a wide temperature range from low to high temperatures.

BRIEF DESCRIPTION OF THE DRAWINGS

[Fig. 1] Fig. 1 shows one embodiment of the pattern of the microporous region [A] according to the present invention.
[Fig. 2] Fig. 2 shows one embodiment of the pattern of the microporous region [A] according to the present invention.
[Fig. 3] Fig. 3 shows one embodiment of the pattern of the microporous region [A] according to the present invention.
[Fig. 4] Fig. 4 shows one embodiment of the pattern of the microporous region [A] according to the present invention.
[Fig. 5] Fig. 5 shows one embodiment of the pattern of the microporous region [A] according to the present invention.
[Fig. 6] Fig. 6 shows one embodiment of the pattern of the microporous region [A] according to the present invention.
[Fig. 7] Fig. 7 shows one embodiment of the pattern of the microporous region [A] according to the present invention.
[Fig. 8] Fig. 8 shows one embodiment of the pattern of the microporous region [A] according to the present invention.
[Fig. 9] Fig. 9 shows one embodiment of the pattern of the microporous region [A] according to the present invention.
[Fig. 10] Fig. 10 shows one embodiment of the pattern of the microporous region [A] according to the present invention.
[Fig. 11] Fig. 11 shows one embodiment of the pattern of the microporous region [A] according to the present invention.
[Fig. 12] Fig. 12 is a schematic diagram (cross-sectional diagram) showing one example of the constitution of the gas diffusion medium according to the present invention.
[Fig. 13] Fig. 13 is a schematic diagram (bird's-eye view from the side of the microporous region [A]) showing one example of the constitution of the gas diffusion medium according to the present invention.
[Fig. 14] Fig. 14 is a schematic diagram (bird's-eye view from the side of the microporous region [A]) showing one example of the constitution of the gas diffusion medium according to the present invention.

[Fig. 15] Fig. 15 is a schematic diagram (cross-sectional diagram) showing one example of the constitution of the membrane electrode assembly according to the present invention.

[Fig. 16] Fig. 16 is a schematic diagram (cross-sectional diagram) showing a particularly preferred example of the constitution of the membrane electrode assembly according to the present invention.

[Fig. 17] Fig. 17 is a schematic diagram (cross-sectional diagram) showing one example of the constitution of the fuel cell according to the present invention.

MODE FOR CARRYING OUT THE INVENTION

The gas diffusion medium according to the present invention comprises a microporous region [A], an electrode base material and a microporous region [B], which are adjacently arranged in the order mentioned. These constituents will each be described below. It is noted here that, in the present invention, a substrate consisting of only a carbon paper or the like without any microporous region being formed thereon is referred to as "electrode base material" and an electrode base material on which a microporous region is formed is referred to as "gas diffusion medium".

First, an electrode base material, which is a constituent of the present invention, will be described.

In the present invention, the electrode base material is required to have high gas diffusibility for allowing a gas supplied from a bipolar plate to be diffused into a catalyst, high drainage property for draining water generated by electrochemical reaction to the bipolar plate, and high electrical conductivity for extracting generated electric current. Therefore, an electrically conductive porous material having a mean pore size of 10 to 100 $\mu$m is preferably used. More specifically, for example, it is preferred to use a carbon fiber-containing porous material such as a carbon fiber woven fabric, carbon fiber paper sheet or carbon fiber non-woven fabric, or a porous metal such as a foamed sintered metal, metal mesh or expanded metal. Thereamong, a carbon fiber-containing porous material is preferably used because of its excellent corrosion resistance and it is more preferred to use a substrate on which a carbon fiber paper sheet is bonded with carbide, namely a "carbon paper", because of its excellent property of absorbing dimensional changes in the thickness direction of electrolyte membrane, namely "spring property". In the present invention, as described below, a substrate on which a carbon fiber paper sheet is bonded with carbide can be normally obtained by impregnating a carbon fiber paper sheet with a resin and then carbonizing the resultant.

Examples of the carbon fiber include polyacrylonitrile (PAN)-based, pitch-based and rayon-based carbon fibers. Thereamong, in the present invention, a PAN-based or pitch-based carbon fiber is preferably used because of its excellent mechanical strength.

The carbon fiber used in the present invention has a monofilament mean diameter in the range of preferably 3 to 20 $\mu$m, more preferably 5 to 10 $\mu$m. When the mean diameter is 3 $\mu$m or larger, since the pore size becomes large, the drainage property is improved and flooding can thus be inhibited. Meanwhile, when the mean diameter is 20 $\mu$m or smaller, since the water vapor diffusibility is reduced, dry-out can be inhibited. Further, it is preferred to use two or more kinds of carbon fibers having different mean diameters since the surface smoothness of the resulting electrode base material can be thereby improved.

Here, the monofilament mean diameter of a carbon fiber is determined by: taking a photograph of the carbon fiber under a microscope such as a scanning electron microscope at a magnification of $\times$ 1,000 or greater; randomly selecting 30 different monofilaments; measuring their diameters; and then calculating the average thereof. As the scanning electron microscope, S-4800 manufactured by Hitachi, Ltd. or its equivalent product can be used.

The carbon fiber used in the present invention has a monofilament mean length in the range of preferably 3 to 20 mm, more preferably 5 to 15 mm. When the mean length is 3 mm or longer, the electrode base material has excellent mechanical strength, electrical conductivity and thermal conductivity, which is preferred. Meanwhile, when the mean length is 20 mm or shorter, since excellent carbon fiber dispersibility is attained at the time of papermaking, a homogeneous electrode base material can be obtained, which is preferred. A carbon fiber having such a mean length can be obtained by, for example, a method of cutting a continuous carbon fiber at a desired length.

Here, the mean length of a carbon fiber is determined by: taking a photograph of the carbon fiber under a microscope such as a scanning electron microscope at a magnification of $\times$50 or greater; randomly selecting 30 different monofilaments; measuring their lengths; and then calculating the average thereof. As the scanning electron microscope, S-4800 manufactured by Hitachi, Ltd. or its equivalent product can be used. It is noted here that the monofilament mean diameter and mean length of a carbon fiber is usually measured by directly observing the carbon fiber used as a raw material; however, they may also be measured by observing the electrode base material.

In the present invention, the density of the electrode base material is in the range of 0.24 to 0.3 g/cm$^3$. When the density is 0.24 g/cm$^3$ or higher, the water vapor diffusibility is small, so that dry-out can be inhibited. In addition, since the mechanical properties of the electrode base material are improved, an electrolyte membrane and a catalyst layer can be adequately supported thereon. Furthermore, high electrical conductivity is attained and the cell performance is thus improved at both high and low temperatures. Meanwhile, when the density is 0.3 g/cm$^3$ or less, the drainage property is improved and flooding can thus be inhibited. An electrode base material having such a density can be obtained by, in the below-described production method, controlling the carbon fiber areal weight of the prepreg, the amount of the resin component to be incorporated with respect to the carbon fibers and the thickness of the electrode base material. It is noted here that, in the present invention, a carbon fiber-containing paper sheet impregnated with a resin composition is referred to as "prepreg". Among the above-described measures, it is effective to control the carbon fiber areal weight of the prepreg and the amount of the resin component to be incorporated with respect to the carbon fibers. Here, a low-density substrate can be obtained by reducing the carbon fiber areal weight of the prepreg and a high-density substrate can be obtained by increasing the carbon fiber areal weight. Further, a low-density substrate can be obtained by reducing the amount of the resin component to be incorporated with respect to the carbon fibers and a high-density substrate can be obtained by increasing the amount of the resin component. Still further, a low-density substrate can be obtained by increasing the thickness of the electrode base material and a high-density substrate can be obtained by reducing the thickness.

The density of an electrode base material can be determined by dividing the areal weight (weight per unit area) of the electrode base material, which is weighed using an electronic balance, by the thickness of the electrode base material when compressed at a pressure of 0.15 MPa.

In the present invention, the pore size of the electrode base material is in the range of preferably 30 to 80 $\mu$m, more preferably 40 to 75 $\mu$m, still more preferably 50 to 70 $\mu$m. When the pore size is 30 $\mu$m or larger, the drainage property is improved and flooding can thus be inhibited. Meanwhile, when the pore size is 80 $\mu$m or smaller, high electrical conductivity is attained and the cell performance is thus improved at both high and low temperatures. In order to design the electrode base material to have a pore size in such a range, it is effective to allow the electrode base material to contain both a carbon fiber having a monofilament mean diameter of 3 $\mu$m to 8 $\mu$m and a carbon fiber having a monofilament mean diameter of 8 $\mu$m or larger.

Here, the pore size of the electrode base material is determined as a peak of a pore size distribution obtained by measuring the pores by a mercury intrusion technique at a pressure of 6 kPa to 414 MPa (pore size: 30 nm to 400 $\mu$m). In cases where a plurality of peaks are obtained, the highest peak value is adopted. As a measuring apparatus, AutoPore 9520 manufactured by Shimadzu Corporation or its equivalent product can be used.

In the present invention, the thickness of the electrode base material is 70 to 160 $\mu$m, more preferably 80 to 110 $\mu$m. When the thickness of the electrode base material is 70 $\mu$m or greater, the electrode base material has high mechanical strength and the handling thereof can thus be made easy. Meanwhile, when the thickness of the electrode base material is 160 $\mu$m or less, since the cross-sectional area of the electrode base material is small and the amount of gas required for allowing liquid water to flow through the flow channel of the bipolar plate is thus increased, plugging can be inhibited. In addition, since the drainage path is shortened, flooding can also be inhibited.

Here, the thickness of the electrode base material can be determined using a micrometer under a condition where the electrode base material is compressed at a pressure of 0.15 MPa.

Next, microporous regions [A] and [B], both of which are constituents of the present invention, will be described.

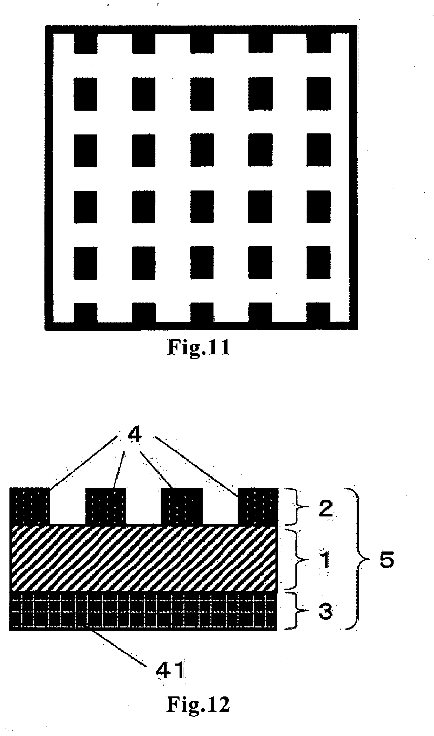

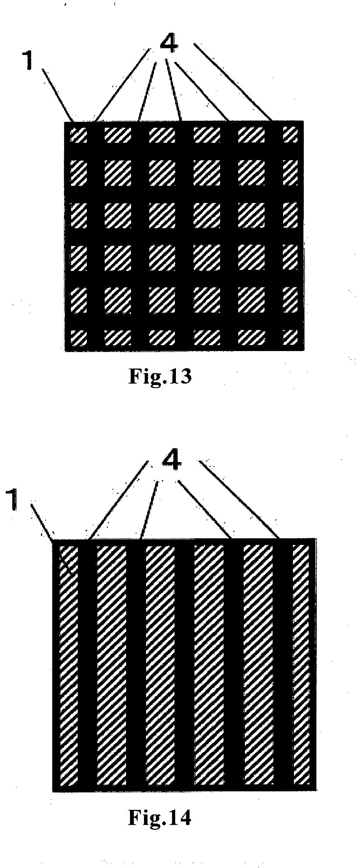

As shown in Fig. 12, the microporous regions [A] and [B] are arranged on each side of the electrode base material. In the present invention, the surface of the electrode base material does not have to be entirely covered with a microporous region. That is, as shown in Figs. 13 and 14, at least a part of the electrode base material surface may be covered with a microporous region. The term "microporous region" used herein refers to a porous material having internal pores. In Figs. 13 and 14, a large number of such microporous regions are arranged on the electrode base material surface to form the microporous region [A]. Needless to say, the microporous region [B] may also assume such a mode as shown in Figs. 13 or 14 as long as it has an areal ratio satisfying the below-described numerical range.

It is required that the microporous region [A] have an areal ratio in the range of 20 to 70% and the microporous region [B] have an areal ratio in the range of 80 to 100%. The term "areal ratio" used herein refers to a proportion (%) of the area covered with the respective microporous regions with respect to the area of the electrode base material on one side of the gas diffusion medium. The areal ratio is calculated by the following equation:

$$\text{Areal ratio (\%) = Area covered with microporous region/Area of electrode base material} \times 100$$

Here, the areal ratio can be determined by, for example, the following procedure.

First, using a digital camera, a digital microscope or the like, one side of the gas diffusion medium is photographed to obtain images thereof. Here, as the digital microscope, a digital HD microscope VH-7000 manufactured by Keyence Corporation or its equivalent product can be used. It is preferred that 10 different spots be randomly selected on the gas diffusion medium and a photograph be taken at each spot for an area of about 3 cm $\times$ 3 cm. Then, the thus obtained images are binarized into the portion covered with a microporous region and the portion not covered with a microporous region. A variety of binarization methods are available and, in cases where the portion covered with a microporous region can be clearly distinguished from the portion not covered with a microporous region, a method of visually distinguishing these portions may be employed; however, in the present invention, it is preferred to employ a method which utilizes an image processing software or the like. Here, as the image processing software, Adobe Photoshop (registered trademark) manufactured by Adobe System Inc. can be used. On each of the images, the proportion (%) of the area covered with a microporous region with respect to the area of the electrode base material (sum of the area of the portion covered with a microporous region and the area of the portion not covered with a microporous region) is calculated and the average thereof is determined.

Meanwhile, in cases where the areal ratio is measured after the gas diffusion medium is incorporated into a membrane electrode assembly or the like, the areal ratio is determined by the following procedure. First, under a microscope such as a scanning electron microscope, 100 spots are randomly selected from a cross-section of the gas diffusion medium and each spot is photographed at a magnification of about $\times 40$ to obtain images. Here, as the scanning electron microscope, S-4800 manufactured by Hitachi, Ltd. or its equivalent product can be used. Then, on each of the thus obtained images, the proportion (%) of the area of the electrode base material surface covered with the respective microporous regions [A] and [B] is measured and the average thereof is determined.

When the areal ratio of the microporous region [A] is controlled at 20 to 70%, the flow channel is made unlikely to retain liquid water, so that plugging can be inhibited. At the same time, since the areal ratio is small, inhibition of gas diffusion perpendicular to the surface and water drainage can be prevented and the anti-flooding characteristic can thus be largely improved. The areal ratio of the microporous region [A] is preferably 20 to 40%. When the areal ratio of the microporous region [A] is 70% or less, since the proportion of the surface of the electrode base material covered with the microporous region [A] is not excessively high, the gas diffusibility perpendicular to the surface and the drainage property are ensured, so that flooding can be inhibited. When the areal ratio of the microporous region [A] is 20% or higher, not only the flow channel is unlikely to retain liquid water and plugging can thus be inhibited, but also back-diffusion of generated water is facilitated and dry-up is thus inhibited.

By controlling the areal ratio of the microporous region [B] at 80 to 100%, back-diffusion of generated water can be facilitated, so that dry-up can be inhibited. In addition, when a membrane electrode assembly is constituted by using the gas diffusion medium and a fuel cell is constituted by using this membrane electrode assembly, since the contact area between the gas diffusion medium and a catalyst layer or bipolar plate is made large, the contact electrical resistance can be reduced. This is because the surface irregularities of the electrode base material are made smooth by being covered with the microporous region [B].

The microporous regions [A] and [B] comprise carbonaceous powder and a hydrophobic resin. It is preferred that the microporous regions constituting the microporous regions [A] and [B] be composed of carbonaceous powder and a hydrophobic resin. Examples of the carbonaceous powder include carbon blacks, graphite powders, carbon nanofibers and milled carbon fibers. Thereamong, a carbon black is preferably used because of its ease of handling. Carbon blacks are classified into, for example, furnace blacks, channel blacks, acetylene blacks and thermal blacks. Examples of the hydrophobic resin include fluorocarbon resins such as polychlorotrifluoroethylene resins (PCTFE), polytetrafluoroethylene resins (PTFE), polyvinylidene fluoride resins (PVDF), tetrafluoroethylene-hexafluoropropylene copolymers (FEP), tetrafluoroethylene-perfluoropropylvinyl ether copolymers (PFA) and tetrafluoroethylene-ethylene copolymers (ETFE).

In the microporous regions [A] and [B] (and microporous regions constituting them), the hydrophobic resin is incorporated in an amount of preferably 1 to 70 parts by mass, more preferably 5 to 60 parts by mass, with respect to 100 parts by mass of the carbonaceous powder. When the amount of the hydrophobic resin is 1 part by mass or more, the microporous regions [A] and [B] have excellent mechanical strength, which is preferred. Meanwhile, when the amount of the hydrophobic resin is 70 parts by mass or less, the microporous regions [A] and [B] have excellent electrical conductivity and thermal conductivity, which is also preferred.

The thickness of the microporous region [A] is in the range of preferably 1 to 20 $\mu$m, more preferably 8 to 16 $\mu$m. When the thickness is 1 $\mu$m or greater, the microporous region [A] has a smooth surface; therefore, when the gas diffusion medium is used in a fuel cell with the microporous region [A] being arranged to face the bipolar plate side, the contact electrical resistance between the bipolar plate and the gas diffusion medium can be reduced. Further, when the thickness is 20 $\mu$m or less, the electrical resistance of the microporous region [A] can be reduced, which is preferred. The thickness of the microporous region [B] is preferably 1 to 50 $\mu$m, more preferably 10 to 30 $\mu$m. When the thickness is 1 $\mu$m or greater, back-diffusion of generated water is markedly facilitated and the microporous region [A] has a smooth surface; therefore, when the gas diffusion medium is used in a fuel cell with the microporous region [B] being arranged to face the catalyst layer side, the contact electrical resistance between the catalyst layer and the gas diffusion medium can be reduced. Further, when the thickness is 50 $\mu$m or less, the electrical resistance of the microporous region [B] can be reduced, which is preferred.

The microporous regions [A] and [B] may have the same composition or different compositions. When the microporous region [A] has a different composition, specifically, it is preferred that the microporous region [A] be made more dense than the microporous region [B] by, for example, using a carbon black having a particle size smaller than that of the microporous region [B], increasing the amount of the hydrophobic resin to be incorporated, or adding a thermosetting resin. More specifically, it is preferred that the porosity of the microporous region [A] be made smaller than that of the microporous region [B]. By this, even if the area ratio of the microporous region [A] is reduced, not only the flow channel is unlikely to retain liquid water and plugging can thus be inhibited, but also inhibition of water drainage from the electrode base material can be prevented and the anti-flooding characteristic can thus be improved.

Preferred embodiments of the microporous region [A] in the present invention will now be described referring to the drawings. It is noted here that, in the following descriptions of the drawings, the same symbol is used for the identical elements and redundant descriptions are omitted. Furthermore, the dimensional ratios of the drawings are exaggerated for the sake of convenience and may thus be different from the actual ratio.

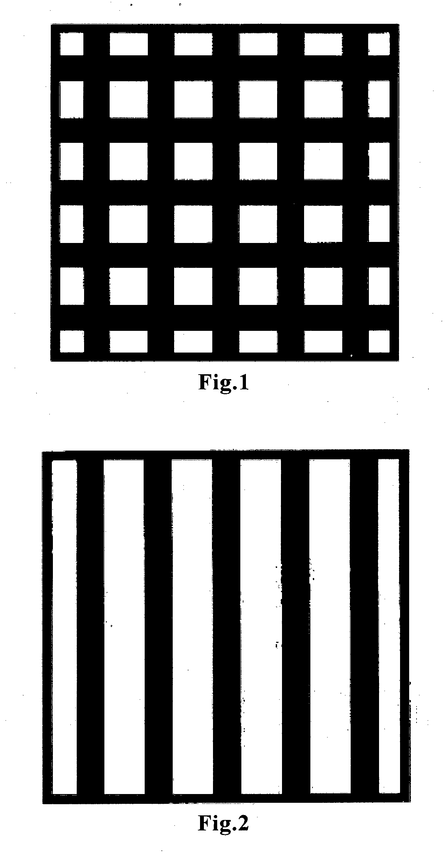

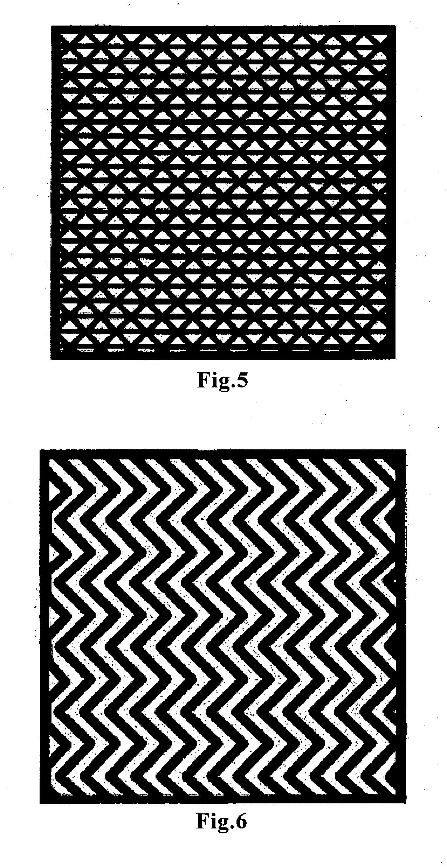

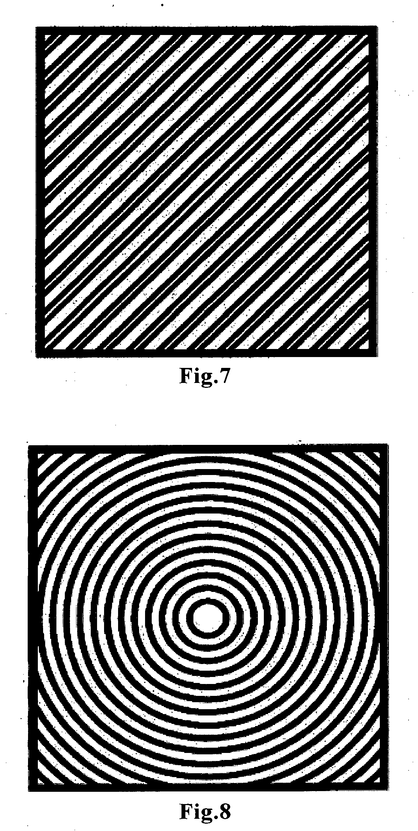

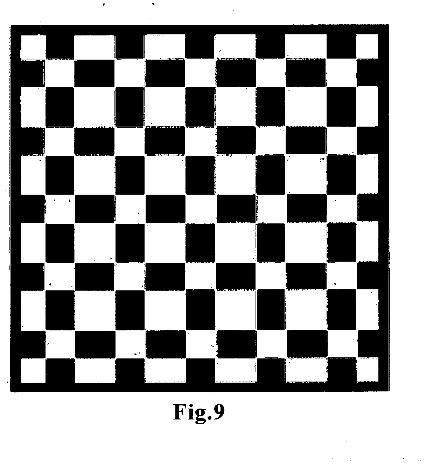

It is preferred that the microporous region [A] form a pattern. In the present invention, the term "pattern-like" or "pattern" refers to a design which is repeated within an area of 100 cm$^2$ or smaller containing such repeating intervals and it is preferred that the design is repeated within an area of 10 cm$^2$ or smaller containing such repeating intervals. By making the interval small, the in-plane variation of the performances such as electrical conductivity and drainage property can be reduced. In cases where plural gas diffusion media are prepared, the presence or absence of such an interval may be verified by comparing the thus obtained sheets. The pattern may be a lattice, stripe, concentric circle, island pattern or the like, and examples thereof include those patterns that are shown in Figs. 1 to 11 (in Figs. 1 to 11, the black parts represent the parts where a microporous region is arranged and the white parts represent the parts where no microporous region is arranged). Further, when the flow channels of the bipolar plate have such a pattern as represented by the white part in Fig. 3, it is preferred that the microporous region [A] have such a pattern corresponding to the rib portion of the bipolar plate as represented by the black part in Fig. 3. By arranging the microporous region [A] having such a pattern corresponding to the rib portion on the electrode base material, the effect of intercepting the path between adjacent flow channels can be increased and this leads to an improvement in the anti-plugging characteristic.

The microporous region [A] is composed of an aggregate of linear microporous regions having a mean line width of preferably 0.1 to 5 mm, more preferably 0.1 to 2 mm, still more preferably 0.1 to 1 mm. In the present invention, the term "line" refers to an object having a width of not less than 0.1 mm and an aspect ratio of not lower than 2. The term "aspect ratio" used herein refers to the ratio between the length (mm) and the width (mm) of a line ([line length]/[line width]). By using an aggregate of linear microporous regions having a mean line width of 0.1 to 5 mm as the microporous region [A], the in-plane variation of the plugging-inhibiting effect can be reduced. When the line width is 0.1 mm or greater, the flow channel is unlikely to retain liquid water, so that high plugging-inhibiting effect can be attained. Meanwhile, when the mean line width is 5 mm or less, the in-plane variation of the electrical conductivity and drainage property can be reduced. Among line aggregates, the microporous region [A] is preferably a lattice-shaped or striped-shape line aggregate. In the present invention, the term "lattice" refers to a design which is formed by an aggregate of lines and comprises parts where lines cross with each other (intersections) and the term "stripe" refers to a design which is formed by an aggregate of lines that do not cross with each other. Among lattice designs, those in which the lines are straight and intersect at an angle of 90° are particularly preferred since the in-plane performance variation of the gas diffusion medium can be reduced. Further, it is still more preferred that the number of intersections be not less than 10 per 1 cm$^2$ since the above-described variations can be thereby largely reduced. Among stripe designs, those in which the lines are straight are particularly preferred since the in-plane performance variation of the gas diffusion medium can be reduced.

That is, in the present invention, it is preferred that the microporous region [A] form a pattern of microporous regions on the electrode base material and it is particularly preferred that the pattern have the above-described lattice shape or stripe shape.

Next, a method suitable for obtaining the gas diffusion medium of the present invention will be concretely described.

<Paper Sheet and Production Method Thereof>

In the present invention, in order to obtain a carbon fiber-containing paper sheet, for example, a wet papermaking method in which a carbon fiber-containing paper sheet is produced by dispersing carbon fibers in a liquid or a dry papermaking method in which a carbon fiber-containing paper sheet is produced by dispersing carbon fibers in the air is employed. Thereamong, a wet papermaking method is preferably employed because of its excellent productivity.

In the present invention, for the purpose of improving the drainage property and gas diffusibility of the electrode base material, carbon fibers can be mixed with an organic fiber to produce a paper sheet. As the organic fiber, for example, a polyethylene fiber, a vinylon fiber, a polyacetal fiber, a polyester fiber, a polyamide fiber, a rayon fiber or an acetate fiber can be used.

Further, in the present invention, for the purpose of improving the shape-retaining property and ease of handling of the paper sheet, an organic polymer can be incorporated as a binder. Here, as the organic polymer, for example, polyvinyl alcohol, polyvinyl acetate, polyacrylonitrile or cellulose can be used.

In the present invention, in order to maintain the in-plane electrical conductivity and thermal conductivity to be isotropic, the paper sheet is preferably in the form of a sheet in which carbon fibers are randomly dispersed in a two-dimensional plane.

Although the pore size distribution obtained for the paper sheet is influenced by the content and dispersion state of the carbon fibers, the pores can be formed at a size of about 20 to 500 $\mu$m.

In the present invention, the paper sheet has a carbon fiber areal weight in the range of preferably 10 to 60 g/m$^2$, more preferably 20 to 50 g/m$^2$. When the carbon fiber areal weight is 10 g/m$^2$ or greater, the electrode base material has excellent mechanical strength, which is preferred. Meanwhile, when the carbon fiber areal weight is 60 g/m$^2$ or less, the electrode base material has excellent gas diffusibility and drainage property, which is also preferred. In cases where a plurality of paper sheets are laminated, it is preferred that the post-lamination carbon fiber areal weight be in the above-described range.

Here, the carbon fiber areal weight in the electrode base material can be determined by retaining a paper sheet cut into a 10-cm square under a nitrogen atmosphere in a 450°C electric furnace for 15 minutes and then dividing the weight of the residue obtained by removal of organic matters by the area of the paper sheet (0.1 m$^2$).

<Impregnation of Resin Composition>

In the present invention, as a method of impregnating a carbon fiber-containing paper sheet with a resin composition, for example, a method of dipping a paper sheet into a resin composition-containing solution, a method of coating a paper sheet with a resin composition-containing solution or a method of laminating and transferring a film composed of a resin composition onto a paper sheet can be employed. Thereamong, a method of dipping a paper sheet into a resin composition-containing solution is preferably employed because of its excellent productivity.

The resin composition used in the present invention is preferably one which is carbonized by baking to yield an electrically conductive carbide. The term "resin composition" refers to a resin component to which a solvent or the like is added as required. Here, the term "resin composition" refers to a component which contains a resin such as a thermosetting resin and, as required, an additive(s) such as a carbon-based filler and a surfactant.

In the present invention, more particularly, it is preferred that the carbonization yield of the resin component contained in the resin composition be 40% by mass or higher. When the carbonization yield is 40% by mass or higher, the electrode base material attains excellent mechanical properties, electrical conductivity and thermal conductivity, which is preferred.

In the present invention, examples of the resin constituting the resin component include thermosetting resins such as phenolic resins, epoxy resins, melamine resins and furan resin. Thereamong, a phenolic resin is preferably used because of its high carbonization yield. Further, as an additive to be added to the resin composition as required, a carbon-based filler can be added for the purpose of improving the mechanical properties, electrical conductivity and thermal conductivity of the electrode base material. Here, as the carbon-based filler, for example, a carbon black, a carbon nanotube, a carbon nanofiber, a milled carbon fiber or graphite can be used.

As the resin composition used in the present invention, a resin component obtained by the above-described constitution can be used as is, or the resin composition may also contain, as required, a variety of solvents for the purpose of improving the impregnation into a paper sheet. Here, as the solvent, for example, methanol, ethanol or isopropyl alcohol can be used.

It is preferred that the resin composition used in the present invention be in a liquid form under a condition of 25°C and 0.1 MPa. When the resin composition is in a liquid form, it has excellent impregnation property into a paper sheet, so that the electrode base material attains excellent mechanical properties, electrical conductivity and thermal conductivity, which is preferred.

In the present invention, a resin component is impregnated into a paper sheet in an amount of preferably 30 to 400 parts by mass, more preferably 50 to 300 parts by mass, with respect to 100 parts by mass of the carbon fibers. When the amount of the impregnated resin component is 30 parts by mass or more, the electrode base material has excellent mechanical properties, electrical conductivity and thermal conductivity, which is preferred. Meanwhile, when the amount of the impregnated resin component is 400 parts by mass or less, the electrode base material has excellent gas diffusibility, which is also preferred.

<Lamination and Annealing>

In the present invention, after the formation of a prepreg in which a carbon fiber-containing paper sheet is impregnated with a resin composition but before carbonization, the thus obtained prepreg can be laminated and/or annealed.

In the present invention, in order to allow the electrode base material to have a prescribed thickness, a plurality of such prepregs can be laminated. In this case, a plurality of prepregs having the same properties can be laminated, or a plurality of prepregs having different properties can be laminated. Specifically, it is possible to laminate a plurality of prepregs that are different in terms of, for example, the mean diameter and average length of the carbon fibers, the carbon fiber areal weight of the paper sheet or the amount of the impregnated resin component.

In the present invention, in order to increase the viscosity of the resin composition or partially cross-link the resin composition, the prepreg can be subjected to annealing. As an annealing method, for example, a method of blowing hot air against the prepreg, a method of heating the prepreg by sandwiching it between hot plates of a press apparatus or a method of heating the prepreg by sandwiching it between continuous belts can be employed.

<Carbonization>

In the present invention, after impregnating the carbon fiber-containing paper sheet with the resin composition, the resulting paper sheet is baked in an inert atmosphere to perform carbonization. For this baking, a batch-type heating furnace or a continuous heating furnace can be used. Further, the inert atmosphere can be obtained by allowing an inert gas such as nitrogen gas or argon gas to flow in the furnace.

In the present invention, the highest temperature in the baking is in the range of preferably 1,300 to 3,000°C, more preferably 1,700 to 3,000°C, still more preferably 1,900 to 3,000°C. When the highest temperature is 1,300°C or higher, carbonization of the resin component is facilitated, so that the resulting electrode base material attains excellent electrical conductivity and thermal conductivity, which is preferred. Meanwhile, when the highest temperature is 3,000°C or lower, the operating cost of the heating furnace is reduced, which is also preferred.

In the present invention, it is preferred that the temperature ramp rate in the baking be in the range of 80 to 5,000°C/min. When the temperature ramp rate is 80°C/min or higher, excellent productivity is preferably attained. Meanwhile, when the temperature ramp rate is 5,000°C/min or lower, since carbonization of the resin component slowly proceeds and a dense structure is formed, the resulting electrode base material attains excellent electrical conductivity and thermal conductivity, which is preferred.

In the present invention, a carbon fiber-containing paper sheet which is impregnated with a resin composition and then carbonized is referred to as "baked carbon fiber paper".

<Water Repellent Treatment>

In the present invention, in order to improve the drainage property, the baked carbon fiber paper is preferably subjected to a water repellent treatment. The water repellent treatment can be performed by coating a hydrophobic resin on the baked carbon fiber paper and subsequently annealing the thus coated paper. The amount of the hydrophobic resin to be coated is preferably 1 to 50 parts by mass, more preferably 3 to 40 parts by mass, with respect to 100 parts by mass of the baked carbon fiber paper. When the amount of the coated hydrophobic resin is 1 part by mass or more, the resulting electrode base material has excellent drainage property, which is preferred. Meanwhile, when the amount of the coated hydrophobic resin is 50 parts by mass or less, the resulting electrode base material has excellent electrical conductivity, which is also preferred.

It is noted here that, in the present invention, a baked carbon fiber paper corresponds to an "electrode base material". As described above, a baked carbon fiber paper is subjected to a water repellent treatment as required and, in the present invention, such a water repellent-treated baked carbon fiber paper also corresponds to an "electrode base material" (it is needless to say that a baked carbon fiber paper which is not subjected to a water repellent treatment also corresponds to an "electrode base material").

<Formation of Microporous Regions [A] and [B]>

The microporous region [A] is formed by coating one side of the electrode base material with a carbon coating liquid [A], which is a mixture of the hydrophobic resin used in the above-described water repellent treatment and carbonaceous powder, and the microporous region [B] is formed by coating the other side of the electrode base material with a carbon coating liquid [B], which is a mixture of the hydrophobic resin used in the above-described water repellent treatment and carbonaceous powder. The carbon coating liquids [A] and [B] may be of the same kind or of different kinds.

By this, in the gas diffusion medium according to the present invention, the microporous region [A], the electrode base material and the microporous region [B] are arranged in the order mentioned.

The carbon coating liquids [A] and [B] may contain a dispersion medium such as water or an organic solvent as well as a dispersant such as a surfactant. As the dispersion medium, water is preferred, and it is more preferred that a nonionic surfactant be used as the dispersant.

The coating of the carbon coating liquids onto the electrode base material can be carried out by using a variety of commercially available coating apparatuses. As a coating method, for example, screen printing, rotary screen printing, spraying, intaglio printing, gravure printing, die coating, bar coating or blade coating can be employed; however, screen printing (including rotary screen printing) or gravure printing is preferred in the pattern coating performed for the formation of the microporous region [A]. That is, in the present invention, it is preferred that the microporous region [A] be formed by screen printing or gravure printing. Thereamong, screen printing is preferred since it is capable of coating a larger amount of the carbon coating liquid [A] on the electrode surface than other methods and the coating amount can be easily adjusted. When the pattern coating of the carbon coating liquid [A] on the electrode base material is performed by screen printing, a patterned screen printing plate is prepared by coating a photosensitive resin on a screen printing plate, curing the parts other than the part of the desired pattern and then removing the uncured resin from the pattern part.

Among screen printing methods, as the coating method, rotary screen printing is preferred since it is capable of continuously coating the carbon coating liquid [A] on the electrode base material.

The mesh, opening ratio, opening diameter and thickness of a rotary screen plate are selected as appropriate in accordance with the viscosity characteristic of the carbon coating liquid [A] to be used.

In the rotary screen printing, the printing speed is preferably 0.5 to 15 m/min. By controlling the printing speed at 0.5 m/min or faster, the productivity is improved, so that the cost of the gas diffusion medium can be reduced. Further, by controlling the printing speed at 15 m/min or slower, the printing accuracy is improved.

Meanwhile, for the coating of the carbon coating liquid [B], die coating is preferably employed since the coating amount can be quantified regardless of the surface roughness of the electrode base material.

The above-described coating methods are presented for the illustration purpose only and the coating method is not necessarily restricted thereto.

As a method of forming the microporous regions [A] and [B], a method in which one side of the electrode base material is coated with a prescribed carbon coating liquid to obtain a coated electrode base material and the coated liquid is then dried at a temperature of 80 to 120°C is preferred.

That is, it is preferred that the coated electrode base material be placed in a drying furnace whose temperature is set at 80 to 120°C and dried for 5 to 30 minutes. The drying air flow may be determined as appropriate; however, rapid drying is not desirable since it induces generation of microcracks on the surface. After the drying, the resulting coated electrode base material is preferably placed in a muffle furnace, a baking furnace or a high-temperature drying furnace and heated at 300 to 380°C for 5 to 20 minutes to melt the hydrophobic resin, thereby forming the microporous regions [A] and [B] with the use of the hydrophobic resin as a binder of carbonaceous powders.

<Membrane Electrode Assembly>

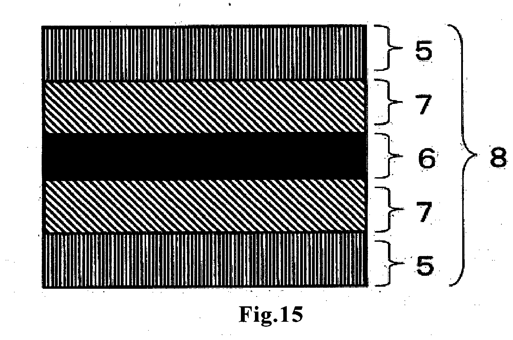

The membrane electrode assembly according to the present invention is a membrane assembly which comprises a catalyst layer on both sides of an electrolyte membrane and a gas diffusion medium on the outer side of the catalyst layer (on the outer side of both the catalyst layers), wherein at least one of the gas diffusion media is the above-described gas diffusion medium. Fig. 15 shows an example of the constitution of the membrane electrode assembly according to the present invention. In this manner, in the present invention, a membrane electrode assembly can be constituted by binding the above-described gas diffusion medium on at least one side of a solid polymer electrolyte membrane having a catalyst layer on both sides. Further, in the membrane electrode assembly according to the present invention, it is particularly preferred that both of the gas diffusion media arranged on the outer side of the respective catalyst layers be the above-described gas diffusion medium according to the present invention.

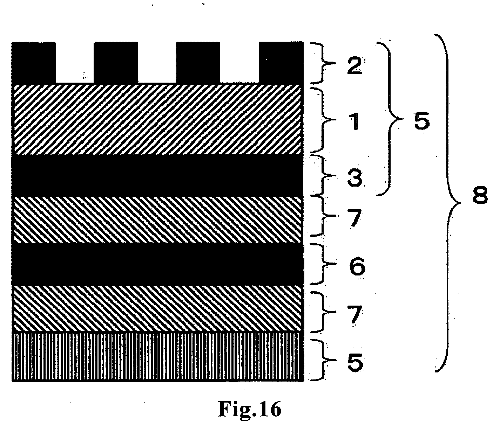

Further, in the membrane electrode assembly according to the present invention, it is preferred that the microporous region [B] be arranged on the catalyst layer side, that is, the membrane electrode assembly be constituted such that the microporous region [B] is in contact with a catalyst layer. Fig. 16 shows an example of the constitution in which the microporous region [B] of the gas diffusion medium is in contact with one of the catalyst layers.

By arranging the microporous region [B] having a large areal ratio on the electrolyte membrane side, back-diffusion of generated water is made more likely to occur and, by arranging the microporous region [A] having a small areal ratio on the bipolar plate side, drainage from the electrode base material is not inhibited and flooding can thus be suppressed. That is, when the microporous region [B] is arranged on the bipolar plate side, drainage from the gas diffusion medium is reduced; therefore, it is preferred that the microporous region [A] be arranged on the bipolar plate side. In addition, by arranging the microporous region [B] having a large areal ratio of microporous region on the catalyst layer side, the contact area between the catalyst layer and the gas diffusion medium is increased, so that the contact electrical resistance can be reduced.

Furthermore, in the membrane electrode assembly according to the present invention, it is preferred that both of the gas diffusion media arranged on the outer side of the respective catalyst layers be the above-described gas diffusion medium according to the present invention, and it is particularly preferred that both of the microporous regions [B] arranged on the respective gas diffusion media be in contact with the respective catalyst layers.

<Fuel Cell>

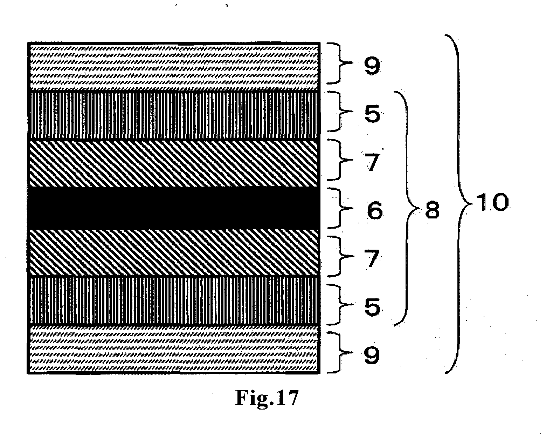

The fuel cell according to the present invention comprises a bipolar plate on both sides of the above-described membrane assembly (Fig. 17 shows an example of the constitution of the fuel cell according to the present invention). That is, the fuel cell is constituted by arranging a bipolar plate on both sides of the above-described membrane electrode assembly. Usually, a polymer electrolyte fuel cell is constituted by laminating a plurality of such membrane electrode assemblies that are sandwiched by bipolar plates from both sides via a gasket. The catalyst layer is composed of a layer comprising a solid polymer electrolyte and a carbon material of carbon-supported catalyst. As the catalyst, platinum is usually used. In a fuel cell in which a carbon monoxide-containing reformed gas is fed to the anode side, it is preferred to use platinum and ruthenium as catalysts of the anode side. As the solid polymer electrolyte, it is preferred to use a perfluorosulfonic acid-based polymer material having high proton conductivity, oxidation resistance and heat resistance. The constitutions of such fuel cell unit and fuel cell are themselves well known.

In the fuel cell according to the present invention, it is preferred that the microporous region [B] of the gas diffusion medium be in contact with a catalyst layer.

EXAMPLES

The present invention will now be concretely described by way of examples thereof. The methods of producing the electrode base materials and gas diffusion media that are used in the examples and the performance evaluation method of fuel cell are described below.

<Preparation of Electrode Base Material>

Polyacrylonitrile-based carbon fibers "TORAYCA (registered trademark)" T300 manufactured by Toray Industries, Inc. (mean carbon fiber diameter: 7 $\mu$m) were cut at a mean length of 12 mm and dispersed in water to continuously prepare a paper sheet by a wet papermaking method. Further, on the thus obtained paper sheet, a 10%-by-mass aqueous solution of polyvinyl alcohol was coated as a binder and then dried to prepare a paper sheet having a carbon fiber areal weight of 15.5 g/m$^2$. The amount of the coated polyvinyl alcohol was 22 parts by mass with respect to 100 parts by mass of the paper sheet.

As a thermosetting resin, a carbon-based filler and a solvent, a resin obtained by mixing a resol-type phenolic resin and a novolak-type phenolic resin at a weight ratio of 1:1, flaky graphite (average particle size: 5 $\mu$m) and methanol, respectively, were mixed at a ratio, thermosetting resin/carbon-based filler/solvent = 10 parts by mass/5 parts by mass/85 parts by mass, and the resulting mixture was stirred for 1 minute using an ultrasonic dispersion apparatus to obtain a uniformly dispersed resin composition.

The paper sheet was cut into a size of 15 cm $\times$ 12.5 cm and dipped into the thus obtained resin composition filled in an aluminum tray, thereby impregnating 130 parts by mass of the resin component (thermosetting resin + carbon-based filler) with respect to 100 parts by mass of the carbon fibers. The resulting paper sheet was subsequently dried by heating at 100°C for 5 minutes to prepare a prepreg. Then, the thus obtained prepreg was annealed at 180°C for 5 minutes while being pressed by a pressing machine with flat plates. Here, when pressing the prepreg, the space between the upper and lower press plates was adjusted by arranging a spacer in the pressing machine such that the annealed prepreg had a thickness of 130 $\mu$m.

The thus annealed prepreg was introduced into a heating furnace having the highest temperature of 2,400°C, in which a nitrogen gas atmosphere is maintained, to obtain a baked carbon fiber paper.

Then, 5 parts by mass of a PTFE resin was added to 95 parts by mass of the thus obtained baked carbon fiber paper and the resultant was dried by heating at 100°C for 5 minutes to prepare an electrode base material of 100 $\mu$m in thickness.

<Formation of Microporous Regions [A] and [B]>

In order to form a microporous region [A], using a screen printing plate masked with a resin except for pattern part, a pattern-like carbon coating liquid part was formed on one side (surface A) of the thus obtained electrode base material. The carbon coating liquid used here was obtained by mixing acetylene black ("DENKA BLACK (registered trademark)", manufactured by Denki Kagaku Kogyo Kabushiki Kaisha) as carbon black, a PTFE resin ("POLYFLON (registered trademark)" D-1E, manufactured by Daikin Industries, Ltd.), a surfactant ("TRITON (registered trademark)" X-100, manufactured by Nacalai Tesque, Inc.) and purified water at a ratio, carbon black/PTFE resin/surfactant/purified water = 7.7 parts by mass/2.5 parts by mass/14 parts by mass/75.8 parts by mass. The electrode base material on which the pattern-like carbon coating liquid part was formed was heated at 120°C for 10 minutes. Then, in order to form a microporous region [B], using a coater (die coater), the above-described carbon coating liquid was coated on the other side of the surface (surface A) having the pattern-like carbon coating liquid part, and the resulting electrode base material was heated at 120°C for 10 minutes. The thus heated electrode base material was further heated at 380°C for 10 minutes to prepare a gas diffusion medium having the microporous region [A] on one side and the microporous region [B] on the other side.

In other words, since a microporous region is formed by coating the electrode base material with the carbon coating liquid and subsequently heating the thus coated electrode base material, the carbon coating liquid was coated on one side (surface A) of the electrode base material in such a manner that the resulting microporous region [A] formed a desired pattern. That is, the carbon coating liquid was coated on the electrode base material using a screen printing plate such that those parts of the electrode base material on which a microporous region was to be formed were coated with the carbon coating liquid while those parts of the electrode base material on which no microporous region was to be formed were not coated with the carbon coating liquid. More specifically, a screen printing plate partially covered (masked) with a resin was used such that the carbon coating liquid was not coated on those parts of the electrode base material on which no microporous region was to be formed. After the coating, the thus coated carbon coating liquid was heated. Subsequently, the carbon coating liquid was coated on the other side (surface B) of the electrode base material (it is noted here that, in cases where a pattern is also formed in the microporous region [B], the same method as the above-described method used for forming the microporous region [A] can be employed). Thereafter, the resulting electrode base material was heated to prepare a gas diffusion medium having the microporous region [A] on one side and the microporous region [B] on the other side (surface B).

<Evaluation of Cell Performance of Polymer Electrolyte Fuel Cell>

A catalyst paste was prepared by sequentially adding 1.00 g of a carbon material of carbon-supported platinum catalyst (manufactured by Tanaka Kikinzoku Kogyo K.K., platinum carrying amount: 50% by mass), 1.00 g of purified water, 8.00 g of "NAFION (registered trademark)" solution (manufactured by Aldrich, "NAFION (registered trademark)", 5.0% by mass) and 18.00 g of isopropyl alcohol (manufactured by Nacalai Tesque, Inc.) in the order mentioned.

Then, on a "NAFLON (registered trademark)" PTFE tape "TOMBO (registered trademark" No. 9001 (manufactured by Nichias Corporation), which was cut into a size of 7 cm $\times$ 7 cm, the thus obtained catalyst paste was coated using a spray and dried at room temperature to prepare a PTFE sheet equipped with a catalyst layer having a platinum amount of 0.3 mg/cm$^2$. Then, a solid polymer electrolyte membrane, "NAFION (registered trademark)" NRE-211CS (manufactured by DuPont), was cut into a size of 10 cm $\times$ 10 cm and sandwiched with two catalyst layer-equipped PTFE sheets. The resultant was pressed for 5 minutes using a pressing machine with flat plates at a pressure of 5 MPa and a temperature of 130°C, thereby transferring the respective catalyst layers onto the solid polymer electrolyte membrane. Thereafter, the PTFE sheets were removed to prepare a catalyst layer-equipped solid polymer electrolyte membrane.

Next, the thus obtained catalyst layer-equipped solid polymer electrolyte membrane was sandwiched with two gas diffusion media cut into a size of 7 cm $\times$ 7 cm and the resultant was pressed for 5 minutes using a pressing machine with flat plates at a pressure of 3 MPa and a temperature of 130°C, thereby preparing a membrane electrode assembly. It is noted here that the gas diffusion media were each arranged such that the surface having the microporous region [B] was in contact with the catalyst layer.

The thus obtained membrane electrode assembly was incorporated into an evaluation unit cell to measure the voltage when the current density was changed. Here, as a bipolar plate, a serpentine-type bipolar plate having one flow channel of 1.5 mm in channel width, 1.0 mm in channel depth and 1.1 mm in rib width was used. Further, the evaluation was carried out with hydrogen pressurized at 210 kPa and air pressurized at 140 kPa being fed to the anode side and the cathode side, respectively. It is noted here that the hydrogen and air were both humidified using a humidification pot whose temperature was set at 70°C and that the stoichiometries of the hydrogen and atmospheric oxygen were set at 80% and 67%, respectively.

First, the output voltage was measured at an operating temperature of 65°C and a current density of 2.2 A/cm$^2$ and the measured value was used as an index of the anti-flooding characteristic (low-temperature performance). Further, the number of reductions in the output voltage was counted when the evaluation unit cell was retained for 30 minutes at an operating temperature of 65°C and a current density of 2.2 A/cm$^2$, and the thus obtained value was used as an index of the anti-plugging characteristic. That is, the number of times when the output voltage was reduced to 0.2 V or lower was counted in a period of 30 minutes and evaluations of C, B, A and S were given when the counted number was 7 or more, 5 or 6, 3 or 4, and 2 or less, respectively. Then, the current density was set at 1.2 A/cm$^2$ and, while repeating a cycle of, from an operating temperature of 80°C, retaining the operating temperature for 5 minutes and then increasing it by 2°C over a period of 5 minutes, the output voltage was measured to determine the upper limit temperature at which the evaluation unit cell was able to generate power, and the thus obtained value was used as an index of the anti-dry-out characteristic (high-temperature performance).

(Example 1)

A gas diffusion medium was obtained in the same manner as described in <Preparation of Electrode Base Material> and <Formation of Microporous Regions [A] and [B]>, except that the microporous region [A] of Example 1 was prepared using a screen printing plate such that it formed a lattice-shaped pattern (lattice shape represented by Fig. 1) constituted by straight lines of 0.5 mm in line width and 0.7 mm in line spacing. The microporous region [A] of the thus obtained gas diffusion medium was measured to have an areal ratio of 66%. As a result of evaluating the cell performance of this gas diffusion medium, the anti-plugging characteristic was found to be extremely good. The output voltage was 0.35 V (operation temperature: 65°C, humidification temperature: 70°C, current density: 2.2 A/cm$^2$) and the upper limit temperature was 91 °C (humidification temperature: 70°C, current density: 1.2 A/cm$^2$) and, as shown in Table 1, the anti-flooding and anti-dry-out characteristics were both good. Furthermore, the speed of coating the carbon coating liquid onto the electrode base material for the formation of the microporous region [A] could be accelerated up to 1 m/min.

(Reference Example 2)[1]

A gas diffusion medium was obtained in the same manner as described in [1] The Reference Examples are outside the scope oft he invention <Preparation of Electrode Base Material> and <Formation of Microporous Regions [A] and [B]>, except that the microporous region [A] of Example 2 was prepared using a screen printing plate such that it formed a lattice-shaped pattern constituted by straight lines of 0.1 mm in line width and 1.8 mm in line spacing. The microporous region [A] of the thus obtained gas diffusion medium was measured to have an areal ratio of 10%. As a result of evaluating the cell performance of this gas diffusion medium, the anti-plugging characteristic was found to be good. The output voltage was 0.38 V (operation temperature: 65°C, humidification temperature: 70°C, current density: 2.2 A/cm$^2$) and the upper limit temperature was 90°C (humidification temperature: 70°C, current density: 1.2 A/cm$^2$) and, as shown in Table 1, the anti-flooding and anti-dry-out characteristics were both good.

(Example 3)

A gas diffusion medium was obtained in the same manner as described in <Preparation of Electrode Base Material> and <Formation of Microporous Regions [A] and [B]>, except that the microporous region [A] of Example 3 was prepared using a screen printing plate such that it formed a lattice-shaped pattern constituted by straight lines of 0.5 mm in line width and 2 mm in line spacing. The microporous region [A] of the thus obtained gas diffusion medium was measured to have an areal ratio of 36%. As a result of evaluating the cell performance of this gas diffusion medium, the anti-plugging characteristic was found to be extremely good. The output voltage was 0.38 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 1, the anti-flooding and anti-dry-out characteristics were both good.

(Example 4)

A gas diffusion medium was obtained in the same manner as described in <Preparation of Electrode Base Material> and <Formation of Microporous Regions [A] and [B]>, except that the microporous region [A] of Example 4 was prepared using a screen printing plate such that it formed a lattice-shaped pattern constituted by straight lines of 0.3 mm in line width and 1.2 mm in line spacing. The microporous region [A] of the thus obtained gas diffusion medium was measured to have an areal ratio of 36%. As a result of evaluating the cell performance of this gas diffusion medium, the anti-plugging characteristic was found to be extremely good. The output voltage was 0.38 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 1, the anti-flooding and anti-dry-out characteristics were both good.

(Reference Example 5)

A gas diffusion medium was obtained in the same manner as described in <Preparation of Electrode Base Material> and <Formation of Microporous Regions [A] and [B]>, except that the microporous region [A] of Example 5 was prepared using a screen printing plate such that it formed a lattice-shaped pattern constituted by straight lines of 0.3 mm in line width and 6 mm in line spacing. The microporous region [A] of the thus obtained gas diffusion medium was measured to have an areal ratio of 9.3%. As a result of evaluating the cell performance of this gas diffusion medium, the anti-plugging characteristic was found to be good. The output voltage was 0.39 V (operation temperature: 65°C, humidification temperature: 70°C, current density: 2.2 A/cm$^2$) and the upper limit temperature was 91°C (humidification temperature: 70°C, current density: 1.2 A/cm$^2$) and, as shown in Table 1, the anti-flooding and anti-dry-out characteristics were both good.

(Example 6)

A gas diffusion medium was obtained in the same manner as described in <Preparation of Electrode Base Material> and <Formation of Microporous Regions [A] and [B]>, except that the microporous region [A] of Example 6 was prepared using a screen printing plate such that it formed a lattice-shaped pattern constituted by straight lines of 0.5 mm in line width and 0.7 mm in line spacing and that the microporous region [B] was prepared using a screen printing plate such that it formed a lattice-shaped pattern constituted by straight lines of 0.5 mm in line width and 0.2 mm in line spacing. The microporous regions [A] and [B] of the thus obtained gas diffusion medium were measured to have an areal ratio of 66% and 92%, respectively. As a result of evaluating the cell performance of this gas diffusion medium, the anti-plugging characteristic was found to be extremely good. The output voltage was 0.35 V (operation temperature: 65°C, humidification temperature: 70°C, current density: 2.2 A/cm$^2$) and the upper limit temperature was 90°C (humidification temperature: 70°C, current density: 1.2 A/cm$^2$) and, as shown in Table 1, the anti-flooding and anti-dry-out characteristics were both good.

(Example 7)

A gas diffusion medium was obtained in the same manner as described in <Preparation of Electrode Base Material> and <Formation of Microporous Regions [A] and [B]>, except that the microporous region [A] of Example 7 was prepared using a screen printing plate such that it formed a lattice-shaped pattern constituted by straight lines of 0.5 mm in line width and 0.7 mm in line spacing and that the microporous region [B] was prepared using a screen printing plate such that it formed a lattice-shaped pattern constituted by straight lines of 0.5 mm in line width and 0.2 mm in line spacing. When preparing a membrane electrode assembly, the thus obtained gas diffusion medium was arranged such that the surface having the microporous region [A] was in contact with the catalyst layer side. The microporous regions [A] and [B] of the gas diffusion medium were measured to have an areal ratio of 66% and 92%, respectively. As a result of evaluating the cell performance of this gas diffusion medium, the anti-plugging characteristic was found to be extremely good. The output voltage was 0.33 V (operation temperature: 65°C, humidification temperature: 70°C, current density: 2.2 A/cm$^2$) and the upper limit temperature was 90°C (humidification temperature: 70°C, current density: 1.2 A/cm$^2$). As shown in Table 1, the anti-dry-out characteristic was good; however, the anti-flooding characteristic was slightly reduced as compared to Example 6.

(Example 8)

A gas diffusion medium was obtained in the same manner as described in <Preparation of Electrode Base Material> and <Formation of Microporous Regions [A] and [B]>, except that the microporous region [A] of Example 8 was prepared using a screen printing plate such that it formed a lattice-shaped pattern constituted by straight lines of 0.1 mm in line width and 0.4 mm in line spacing. The microporous region [A] of the thus obtained gas diffusion medium was measured to have an areal ratio of 36%. As a result of evaluating the cell performance of this gas diffusion medium, the anti-plugging characteristic was found to be good. The output voltage was 0.39 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 1, the anti-flooding and anti-dry-out characteristics were both good.

(Example 9)

A gas diffusion medium was obtained in the same manner as described in <Preparation of Electrode Base Material> and <Formation of Microporous Regions [A] and [B]>, except that the microporous region [A] of Example 9 was prepared using a screen printing plate such that it formed a lattice-shaped pattern constituted by straight lines of 3 mm in line width and 12 mm in line spacing. The microporous region [A] of the thus obtained gas diffusion medium was measured to have an areal ratio of 36%. As a result of evaluating the cell performance of this gas diffusion medium, the anti-plugging characteristic was found to be good. The output voltage was 0.36 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 2, the anti-flooding and anti-dry-out characteristics were both good.

(Example 10)

A gas diffusion medium was obtained in the same manner as described in <Preparation of Electrode Base Material> and <Formation of Microporous Regions [A] and [B]>, except that the microporous region [A] of Example 10 was prepared using a screen printing plate such that it formed a stripe-shaped pattern constituted by straight lines of 0.5 mm in line width and 0.9 mm in line spacing. The microporous region [A] of the thus obtained gas diffusion medium was measured to have an areal ratio of 36%. As a result of evaluating the cell performance of this gas diffusion medium, the anti-plugging characteristic was found to be extremely good. The output voltage was 0.38 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 2, the anti-flooding and anti-dry-out characteristics were both good.

(Example 11)

A gas diffusion medium was obtained in the same manner as described in <Preparation of Electrode Base Material> and <Formation of Microporous Regions [A] and [B]>, except that the microporous region [A] of Example 11 was prepared using a screen printing plate such that it formed an island pattern (shape represented by Fig. 11) in which the islands are 0.5 mm in both length and width and spaced by 0.33 mm. The microporous region [A] of the thus obtained gas diffusion medium was measured to have an areal ratio of 36%. As a result of evaluating the cell performance of this gas diffusion medium, the anti-plugging characteristic was found to be slightly reduced. The output voltage was 0.36 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 2, the anti-flooding and anti-dry-out characteristics were both good.

(Example 12)

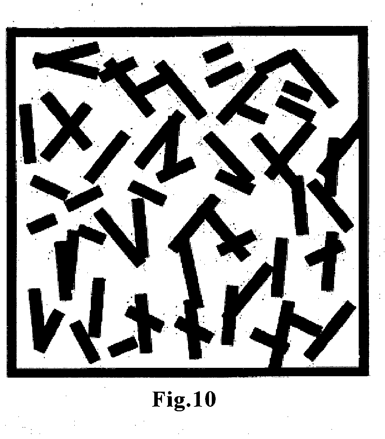

A gas diffusion medium was obtained in the same manner as described in <Preparation of Electrode Base Material> and <Formation of Microporous Regions [A] and [B]>, except that the microporous region [A] of Example 12 was prepared using a screen printing plate such that it formed a random shape containing parts that are smaller than 0.1 mm in line width (shape represented by Fig. 10). The microporous region [A] of the thus obtained gas diffusion medium was measured to have an areal ratio of 36%. As a result of evaluating the cell performance of this gas diffusion medium, the anti-plugging characteristic was found to be slightly reduced. The output voltage was 0.35 V (operation temperature: 65°C, humidification temperature: 70°C, current density: 2.2 A/cm$^2$) and the upper limit temperature was 91 °C (humidification temperature: 70°C, current density: 1.2 A/cm$^2$). As shown in Table 2, although the anti-flooding characteristic was slightly reduced, the anti-dry-out characteristic was good.

(Example 13)

A gas diffusion medium was obtained in the same manner as described in <Preparation of Electrode Base Material> and <Formation of Microporous Regions [A] and [B]>, except that the microporous region [A] of Example 13 was prepared using a screen printing plate such that it formed a stripe-shaped pattern constituted by straight lines of 0.1 mm in line width and 0.2 mm in line spacing. The microporous region [A] of the thus obtained gas diffusion medium was measured to have an areal ratio of 33%. As a result of evaluating the cell performance of this gas diffusion medium, the anti-plugging characteristic was found to be slightly reduced. The output voltage was 0.36 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 2, the anti-flooding and anti-dry-out characteristics were both good.

(Example 14)

A gas diffusion medium was obtained in the same manner as described in <Preparation of Electrode Base Material> and <Formation of Microporous Regions [A] and [B]>, except that the microporous region [A] of Example 14 was prepared using a screen printing plate such that it formed a stripe-shaped pattern constituted by straight lines of 0.3 mm in line width and 0.5 mm in line spacing. The microporous region [A] of the thus obtained gas diffusion medium was measured to have an areal ratio of 38%. As a result of evaluating the cell performance of this gas diffusion medium, the anti-plugging characteristic was found to be extremely good. The output voltage was 0.38 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 2, the anti-flooding and anti-dry-out characteristics were both good.

(Example 15)

A gas diffusion medium was obtained in the same manner as described in <Preparation of Electrode Base Material> and <Formation of Microporous Regions [A] and [B]>, except that the microporous region [A] of Example 15 was prepared using a screen printing plate such that it formed a stripe-shaped pattern constituted by straight lines of 10 mm in line width and 18 mm in line spacing. The microporous region [A] of the thus obtained gas diffusion medium was measured to have an areal ratio of 36%. As a result of evaluating the cell performance of this gas diffusion medium, the anti-plugging characteristic was found to be slightly reduced. The output voltage was 0.35 V (operation temperature: 65°C, humidification temperature: 70°C, current density: 2.2 A/cm$^2$) and the upper limit temperature was 91°C (humidification temperature: 70°C, current density: 1.2 A/cm$^2$) and, as shown in Table 2, the anti-flooding and anti-dry-out characteristics were both good.

(Example 16)

A gas diffusion medium was obtained in the same manner as described in <Preparation of Electrode Base Material> and <Formation of Microporous Regions [A] and [B]>, except that the microporous region [A] of Example 16 was prepared using a screen printing plate such that it formed a lattice-shaped pattern constituted by straight lines of 0.3 mm in line width and 2.0 mm in line spacing. The microporous region [A] of the thus obtained gas diffusion medium was measured to have an areal ratio of 24%. As a result of evaluating the cell performance of this gas diffusion medium, the anti-plugging characteristic was found to be extremely good. The output voltage was 0.39 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 2, the anti-flooding and anti-dry-out characteristics were both good.

(Example 17)

A gas diffusion medium was obtained in the same manner as described in <Preparation of Electrode Base Material> and <Formation of Microporous Regions [A] and [B]>, except that the microporous region [A] of Example 17 was prepared using a rotary screen printing plate such that it formed a lattice-shaped pattern constituted by straight lines of 0.3 mm in line width and 2.0 mm in line spacing. The microporous region [A] of the thus obtained gas diffusion medium was measured to have an areal ratio of 24%. As a result of evaluating the cell performance of this gas diffusion medium, the anti-plugging characteristic was found to be extremely good. The output voltage was 0.39 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 3, the anti-flooding and anti-dry-out characteristics were both good. Furthermore, the speed of coating the carbon coating liquid onto the electrode base material for the formation of the microporous region [A] could be accelerated up to 5 m/min.

(Example 18)

A gas diffusion medium was obtained in the same manner as described in <Preparation of Electrode Base Material> and <Formation of Microporous Regions [A] and [B]>, except that the microporous region [A] of Example 18 was prepared using a rotary screen printing plate such that it formed a lattice-shaped pattern constituted by straight lines of 0.3 mm in line width and 1.2 mm in line spacing. The microporous region [A] of the thus obtained gas diffusion medium was measured to have an areal ratio of 36%. As a result of evaluating the cell performance of this gas diffusion medium, the anti-plugging characteristic was found to be extremely good. The output voltage was 0.38 V (operation temperature: 65°C, humidification temperature: 70°C, current density: 2.2 A/cm$^2$) and the upper limit temperature was 92°C (humidification temperature: 70°C, current density: 1.2 A/cm$^2$) and, as shown in Table 3, the anti-flooding characteristic, the anti-dry-out characteristic and the coating speed of the microporous region [A] were all good. Furthermore, the speed of coating the carbon coating liquid onto the electrode base material for the formation of the microporous region [A] could be accelerated up to 5 m/min.

(Example 19)

A gas diffusion medium was obtained in the same manner as described in <Preparation of Electrode Base Material> and <Formation of Microporous Regions [A] and [B]>, except that the microporous region [A] of Example 19 was prepared by gravure printing such that it formed a lattice-shaped pattern constituted by straight lines of 0.3 mm in line width and 1.2 mm in line spacing. The microporous region [A] of the thus obtained gas diffusion medium was measured to have an areal ratio of 36%. As a result of evaluating the cell performance of this gas diffusion medium, the anti-plugging characteristic was found to be good. The output voltage was 0.36 V (operation temperature: 65°C, humidification temperature: 70°C, current density: 2.2 A/cm$^2$) and the upper limit temperature was 91 °C (humidification temperature: 70°C, current density: 1.2 A/cm$^2$) and, as shown in Table 3, the anti-flooding and anti-dry-out characteristics were both good. Furthermore, the speed of coating the carbon coating liquid onto the electrode base material for the formation of the microporous region [A] could be accelerated up to 2 m/min.

(Example 20)

A gas diffusion medium was obtained in the same manner as described in <Preparation of Electrode Base Material> and <Formation of Microporous Regions [A] and [B]>, except that the microporous region [A] of Example 20 was prepared using a screen printing plate such that it formed a stripe-shaped pattern constituted by straight lines of 0.5 mm in line width and 0.9 mm in line spacing and that the microporous region [B] was prepared using a screen printing plate such that it formed a lattice-shaped pattern constituted by straight lines of 0.5 mm in line width and 0.2 mm in line spacing. The microporous regions [A] and [B] of the thus obtained gas diffusion medium were measured to have an areal ratio of 36% and 92%, respectively. As a result of evaluating the cell performance of this gas diffusion medium, the anti-plugging characteristic was found to be extremely good. The output voltage was 0.38 V (operation temperature: 65°C, humidification temperature: 70°C, current density: 2.2 A/cm$^2$) and the upper limit temperature was 90°C (humidification temperature: 70°C, current density: 1.2 A/cm$^2$) and, as shown in Table 3, the anti-flooding and anti-dry-out characteristics were both good.

(Example 21)

A gas diffusion medium was obtained in the same manner as described in <Preparation of Electrode Base Material> and <Formation of Microporous Regions [A] and [B]>, except that the microporous region [A] of Example 21 was prepared using a screen printing plate such that it formed a stripe-shaped pattern constituted by straight lines of 0.5 mm in line width and 0.9 mm in line spacing and that the microporous region [B] was prepared using a screen printing plate such that it formed a lattice-shaped pattern constituted by straight lines of 0.5 mm in line width and 0.2 mm in line spacing. When preparing a membrane electrode assembly, the thus obtained gas diffusion medium was arranged such that the surface having the microporous region [A] was in contact with the catalyst layer side. The microporous regions [A] and [B] of the gas diffusion medium were measured to have an areal ratio of 36% and 92%, respectively. As a result of evaluating the cell performance of this gas diffusion medium, the anti-plugging characteristic was found to be extremely good. The output voltage was 0.33 V (operation temperature: 65°C, humidification temperature: 70°C, current density: 2.2 A/cm$^2$) and the upper limit temperature was 89°C (humidification temperature: 70°C, current density: 1.2 A/cm$^2$). As shown in Table3, the anti-dry-out characteristic was good; however, the anti-flooding characteristic was slightly reduced as compared to Example 20.

The evaluation results and the like of Examples are summarized in Tables 1 to 3.

[Table 1]

| | | Example 1 | Reference Example 2 | Example 3 | Example 4 | Reference Example 5 | Example 6 | Example 7 | Example 8 |
|---|---|---|---|---|---|---|---|---|---|
| Microporous region [A] | Shape | lattice | lattice | lattice | lattice | lattice | lattice | lattice | lattice |
| | Line width [mm] | 0.5 | 0.1 | 0.5 | 0.3 | 0.3 | 0.5 | 0.5 | 0.1 |
| | Line spacing [mm] | 0.7 | 1.8 | 2 | 1.2 | 6 | 0.7 | 0.7 | 0.4 |
| | Areal ratio [%] | 66 | 10 | 36 | 36 | 9.3 | 66 | 66 | 36 |
| Microporous region [B] | Shape | planar | planar | planar | planar | planar | lattice | lattice | planar |
| | Line width [mm] | - | - | - | - | - | 0.5 | 0.5 | - |
| | Line spacing [mm] | - | - | - | - | - | 0.2 | 0.2 | - |
| | Areal ratio [%] | 100 | 100 | 100 | 100 | 100 | 92 | 92 | 100 |
| Microporous region arranged to face catalyst layer | | [B] | [B] | [B] | [B] | [B] | [B] | [A] | [B] |
| Method of coating microporous region [A] | | screen | screen | screen | screen | screen | screen | screen | screen |
| Anti-flooding characteristic | Output voltage [V] (operating temperature: 65°C, humidification temperature: 70°C, current density: 2.2 A/cm$^2$) | 0.35 | 0.38 | 0.38 | 0.38 | 0.39 | 0.35 | 0.33 | 0.39 |
| Anti-plugging characteristic | Evaluation of the frequency of output voltage reduction (operating temperature: 65°C, humidification temperature: 70°C, current density: 2.2 A/cm$^2$, 30-minute retention) | S | A | S | S | A | S | S | A |
| Anti-dry-out characteristic | Upper limit temperature [°C] (humidification temperature: 70°C, current density: 1.2 A/cm$^2$) | 91 | 90 | 92 | 92 | 91 | 90 | 90 | 92 |
| Coating speed of microporous region [A] [m/min] | | 1 | 1 | 1 | 1 | 1 | 1 | 1 | 1 |

EP 2 800 180 B1

[Table 2]

| | | Example 9 | Example 10 | Example 11 | Example 12 | Example 13 | Example 14 | Example 15 | Example 16 |
|---|---|---|---|---|---|---|---|---|---|
| Microporous region [A] | Shape | lattice | stripe | island | random | stripe | stripe | stripe | lattice |
| | Line width [mm] | 3 | 0.5 | 0.5 | - | 0.1 | 0.3 | 10 | 0.3 |
| | Line spacing [mm] | 12 | 0.9 | 0.33 | - | 0.2 | 0.5 | 18 | 2 |
| | Areal ratio [%] | 36 | 36 | 36 | 36 | 33 | 38 | 36 | 24 |
| Microporous region [B] | Shape | planar | planar | planar | planar | planar | planar | planar | planar |
| | Line width [mm] | - | - | - | - | - | - | - | - |
| | Line spacing [mm] | - | - | - | - | - | - | - | - |
| | Areal ratio [%] | 100 | 100 | 100 | 100 | 100 | 100 | 100 | 100 |
| Microporous region arranged to face catalyst layer | | [B] | [B] | [B] | [B] | [B] | [B] | [B] | [B] |
| Method of coating microporous region [A] | | screen | screen | screen | screen | screen | screen | screen | screen |
| Anti-flooding characteristic | Output voltage [V] (operating temperature: 65°C, humidification temperature: 70°C, current density: 2.2 A/cm$^2$) | 0.36 | 0.38 | 0.36 | 0.35 | 0.36 | 0.38 | 0.35 | 0.39 |
| Anti-plugging characteristic | Evaluation of the frequency of output voltage reduction (operating temperature: 65°C, humidification temperature: 70°C, current density: 2.2 A/cm$^2$, 30-minute retention) | A | S | B | B | B | S | B | S |
| Anti-dry-out characteristic | Upper limit temperature [°C] (humidification temperature: 70°C, current density: 1.2 A/cm$^2$) | 92 | 92 | 92 | 91 | 92 | 92 | 91 | 92 |
| Coating speed of microporous region [A] [m/min] | | 1 | 1 | 1 | 1 | 1 | 1 | 1 | 1 |

[Table 3]

| | | Example 17 | Example 18 | Example 19 | Example 20 | Example 21 |
|---|---|---|---|---|---|---|
| Microporous region [A] | Shape | lattice | lattice | lattice | stripe | stripe |
| | Line width [mm] | 0.3 | 0.3 | 0.3 | 0.5 | 0.5 |
| | Line spacing [mm] | 2 | 1.2 | 1.2 | 0.9 | 0.9 |
| | Areal ratio [%] | 24 | 36 | 36 | 36 | 36 |
| Microporous region [B] | Shape | planar | planar | planar | lattice | lattice |
| | Line width [mm] | - | - | - | 0.5 | 0.5 |
| | Line spacing [mm] | - | - | - 0.2 | 0.2 | 0.2 |
| | Areal ratio [%] | 100 | 100 | 100 | 92 | 92 |
| Microporous region arranged to face catalyst layer | | [B] | [B] | [B] | [B] | [A] |
| Method of coating microporous region [A] | | rotary screen | rotary screen | gravure | screen | screen |
| Anti-flooding characteristic | Output voltage [V] (operating temperature: 65°C, humidification temperature: 70°C, current density: 2.2 A/cm$^2$) | 0.39 | 0.38 | 0.36 | 0.38 | 0.33 |
| Anti-plugging characteristic | Evaluation of the frequency of output voltage reduction (operating temperature: 65°C, humidification temperature: 70°C, current density: 2.2 A/cm$^2$, 30-minute retention) | S | S | A | S | S |
| Anti-dry-out characteristic | Upper limit temperature [°C] (humidification temperature: 70°C, current density: 1.2 A/cm$^2$) | 92 | 92 | 91 | 90 | 89 |
| Coating speed of microporous region [A] [m/min] | | 5 | 5 | 2 | 1 | 1 |

(Comparative Example 1)

A gas diffusion medium was obtained in the same manner as described in <Preparation of Electrode Base Material> and <Formation of Microporous Regions [A] and [B]>, except that no microporous region [A] was arranged on the electrode base material of Comparative Example 1. As a result of evaluating the cell performance of this gas diffusion medium, the anti-plugging characteristic was found to be largely reduced. The output voltage was 0.38 V (operation temperature: 65 °C, humidification temperature: 70°C, current density: 2.2 A/cm$^2$) and the upper limit temperature was 88°C (humidification temperature: 70°C, current density: 1.2 A/cm$^2$). As shown in Table 4, the anti-flooding characteristic was good; however, anti-dry-out characteristic was reduced.

(Comparative Example 2)

A gas diffusion medium was obtained in the same manner as described in <Preparation of Electrode Base Material> and <Formation of Microporous Regions [A] and [B]>, except that the microporous region [A] of Comparative Example 2 was prepared in a planar form using a coater (die coater). The microporous region [A] of the thus obtained gas diffusion medium was measured to have an areal ratio of 100%. As a result of evaluating the cell performance of this gas diffusion medium, the output voltage could not be extracted (operation temperature: 65°C, humidification temperature: 70°C, current density: 2.2 A/cm$^2$) and the upper limit temperature was found to be 89°C (humidification temperature: 70°C, current density: 1.2 A/cm$^2$). As shown in Table 4, the anti-flooding and anti-dry-out characteristics were both reduced. The reason why the high-temperature performance was poor is because the areal ratio of the microporous region [A] was high, so that the gas diffusibility perpendicular to the surface of the gas diffusion medium was low and the fuel could not be sufficiently supplied to the catalyst. Furthermore, since the areal ratio of the microporous region [A] was high, the drainage property was low and flooding was thus induced inside the electrode base material, which resulted in a reduction in the low-temperature performance. It is noted here, however, that the speed of coating the carbon coating liquid onto the electrode base material for the formation of the microporous region [A] could be accelerated up to 2 m/min.

(Comparative Example 3)

A gas diffusion medium was obtained in the same manner as described in <Preparation of Electrode Base Material> and <Formation of Microporous Regions [A] and [B]>, except that the microporous region [A] of Comparative Example 3 was prepared using a screen printing plate such that it formed a lattice-shaped pattern constituted by straight lines of 0.5 mm in line width and 0.5 mm in line spacing. The microporous region [A] of the thus obtained gas diffusion medium was measured to have an areal ratio of 75%. As a result of evaluating the cell performance of this gas diffusion medium, the anti-plugging characteristic was found to be extremely good. The output voltage was 0.25 V (operation temperature: 65°C, humidification temperature: 70°C, current density: 2.2 A/cm$^2$) and the upper limit temperature was 88°C (humidification temperature: 70°C, current density: 1.2 A/cm$^2$). As shown in Table 4, the anti-flooding and anti-dry-out characteristics were both reduced. The reason why the high-temperature performance was poor is because the areal ratio of the microporous region [A] was high, so that the gas diffusibility perpendicular to the surface of the gas diffusion mediumwas low and the fuel could not be sufficiently supplied to the catalyst. Furthermore, since the areal ratio of the microporous region [A] was high, the drainage property was low and flooding was thus induced inside the electrode base material, which resulted in a reduction in the low-temperature performance.

(Comparative Example 4)

A gas diffusion medium was obtained in the same manner as described in <Preparation of Electrode Base Material> and <Formation of Microporous Regions [A] and [B]>, except that the microporous region [A] of Comparative Example 4 was prepared using a screen printing plate such that it formed a lattice-shaped pattern constituted by straight lines of 0.5 mm in line width and 20 mm in line spacing. The microporous region [A] of the thus obtained gas diffusion medium was measured to have an areal ratio of 4.8%. As a result of evaluating the cell performance of this gas diffusion medium, the anti-plugging characteristic was found to be largely reduced. This is because the areal ratio of the microporous region [A] was small and the flow channel was unlikely to retain liquid water. The output voltage was 0.38 V (operation temperature: 65°C, humidification temperature: 70°C, current density: 2.2 A/cm$^2$) and the upper limit temperature was 88°C (humidification temperature: 70°C, current density: 1.2 A/cm$^2$). As shown in Table 4, the anti-flooding characteristic was good; however, ariti-dry-out characteristic was reduced.

(Comparative Example 5)

A gas diffusion medium was obtained in the same manner as described in <Preparation of Electrode Base Material> and <Formation of Microporous Regions [A] and [B]>, except that no microporous region [A] was arranged on the electrode base material of Comparative Example 5 and that the microporous region [B] was prepared using a screen printing plate having a lattice-shaped pattern constituted by straight lines of 0.5 mm in line width and 2 mm in line spacing. The areal ratio of the microporous region [B] of the thus obtained gas diffusion medium was 36%. As a result of evaluating the cell performance of the gas diffusion medium, the output voltage could not be extracted (operation temperature: 65°C, humidification temperature: 70°C, current density: 2.2 A/cm$^2$) and the upper limit temperature was found to be 85°C (humidification temperature: 70°C, current density: 1.2 A/cm$^2$). As shown in Table 4, the anti-flooding and anti-dry-out characteristics were both reduced. The reason why the low-temperature performance was poor is because the areal ratio of the microporous region [B] was low, so that the contact area between the microporous region [B] and the catalyst layer was small and the contact electrical resistance was thus large. Further, the reason why the high-temperature performance was poor is because, due to the low areal ratio of the microporous region [B], water vapor was likely to escape to the bipolar plate side and the electrolyte membrane was thus prominently dried.

(Comparative Example 6)

A gas diffusion medium was obtained in the same manner as described in <Preparation of Electrode Base Material> and <Formation of Microporous Regions [A] and [B]>, except that the microporous region [A] of Comparative Example 6 was prepared using a screen printing plate such that it formed a lattice-shaped pattern constituted by straight lines of 0.5 mm in line width and 2 mm in line spacing and that the microporous region [B] was also prepared using a screen printing plate such that it formed a lattice-shaped pattern constituted by straight lines of 0.5 mm in line width and 2 mm in line spacing. The microporous regions [A] and [B] of the thus obtained gas diffusion medium both had an areal ratio of 36% and, as a result of evaluating the cell performance of the gas diffusion medium, the output voltage could not be extracted (operation temperature: 65°C, humidification temperature: 70°C, current density: 2.2 A/cm$^2$) and the upper limit temperature was found to be 85°C (humidification temperature: 70°C, current density: 1.2 A/cm$^2$). As shown in Table 4, the anti-flooding and anti-dry-out characteristics were both reduced. The reason why the low-temperature performance was poor is because the areal ratio of the microporous region [B] was low, so that the contact area between the microporous region [B] and the catalyst layer was small and the contact electrical resistance was thus large. Further, the reason why the high-temperature performance was poor is because, due to the low areal ratio of the microporous region [B], water vapor was likely to escape to the bipolar plate side and the electrolyte membrane was thus prominently dried.

The evaluation results and the like of Comparative Examples are summarized in Table 4.

[Table 4]

| | | Comparative Example 1 | Comparative Example 2 | Comparative Example 3 | Comparative Example 4 | Comparative Example 5 | Comparative Example 6 |
|---|---|---|---|---|---|---|---|
| Microporous region [A] | Shape | - | planar | lattice | lattice | - | lattice |
| | Line width [mm] | - | - | 0.5 | 0.5 | - | 0.5 |
| | Line spacing [mm] | - | - | 0.5 | 20 | - | 2 |
| | Areal ratio [%] | 0 | 100 | 75 | 4.8 | 0 | 36 |
| Microporous region [B] | Shape | planar | planar | planar | planar | lattice | lattice |
| | Line width [mm] | - | - | - | - | 0.5 | 0.5 |
| | Line spacing [mm] | - | - | - | - | 2 | 2 |
| | Areal ratio [%] | 100 | 100 | 100 | 100 | 36 | 36 |
| Microporous region arranged to face catalyst layer | | [B] | [B] | [B] | [B] | [B] | [B] |
| Method of coating microporous region [A] | | - | die coater | screen | screen | - | screen |
| Anti-flooding characteristic | Output voltage [V] (operating temperature: 65°C, humidification temperature: 70°C, current density: 2.2 A/cm$^2$) | 0.38 | - | 0.25 | 0.38 | - | - |
| Anti-plugging characteristic | Evaluation of the frequency of output voltage reduction (operating temperature: 65°C, humidification temperature: 70°C, current density: 2.2 A/cm$^2$, 30-minute retention) | C | - | S | C | - | - |
| Anti-dry-out characteristic | Upper limit temperature [°C] (humidification temperature: 70°C, current density: 1.2 A/cm$^2$) | 88 | 89 | 88 | 88 | 85 | 85 |
| Coating speed of microporous region [A] [m/min] | | - | 2 | 1 | 1 | - | 1 |

EP 2 800 180 B1

DESCRIPTION OF SYMBOLS

1: Electrode base material
2: Microporous region [A]
3: Microporous region [B]
4: Microporous region
5: Gas diffusion medium
6: Electrolyte membrane
7: Catalyst layer
8: Membrane electrode assembly
9: Bipolar plate
10: Fuel cell

**Claims**

1. A gas diffusion medium (5) for a fuel cell (10), comprising a microporous region A (2), an electrode base material (1) and a microporous region B (3) that are arranged in the order mentioned, wherein
said microporous region B (3) has an areal ratio in the range of 80 to 100%, the microporous region A (2) comprises hydrophobic resin and carbonaceous powder, and
the microporous region B (3) comprises hydrophobic resin and carbonaceous powder,
**characterized in that**
said microporous region A (2) has an areal ratio in the range of 20 to 70%; the thickness of the electrode base material (1) is 70 to 160 $\mu$m, the density of the electrode base material (1) is in the range of 0.24 to 0.3 g/cm$^3$, and the term "areal ratio" used herein refers to a proportion (%) of the area covered with the respective microporous regions (2, 3) with respect to the area of the electrode base material (1) on one side of the gas diffusion medium (5), calculated by the following equation:

$$\text{Areal ratio (\%)} = \text{Area covered with microporous region/Area of electrode base material} \times 100.$$

2. The gas diffusion medium for a fuel cell according to claim 1, wherein said microporous region A (2) forms a pattern, wherein a pattern refers to a design which is repeated within an area of 100 cm$^2$ or smaller.

3. The gas diffusion medium for a fuel cell according to claim 1 or 2, wherein said microporous region A (2) is composed of an aggregate of linear microporous regions having a mean line width of 0.1 to 5 mm.

4. The gas diffusion medium for a fuel cell according to any one of claims 1 to 3, wherein said microporous region A (2) is stripe-shaped or lattice-shaped.

5. A method of producing the gas diffusion medium (5) for a fuel cell (10) according to any one of claims 1 to 4, wherein said microporous region A (2) is formed by screen printing or a gravure printing.

6. A membrane electrode assembly (8), comprising a catalyst layer (7) on both sides of an electrolyte membrane (6) and a gas diffusion medium (5) on the outer side of said catalyst layers (7), wherein
at least one of said gas diffusion media is the gas diffusion medium according to any one of claims 1 to 4.

7. The membrane electrode assembly according to claim 6, wherein said microporous region B (3) of said gas diffusion medium (5) is in contact with said catalyst layer (7).

8. A fuel cell (10), comprising a bipolar plate (9) on both sides of the membrane electrode assembly (8) according to claim 7.

**Patentansprüche**

1.  Gasdiffusionsmedium (5) für eine Brennstoffzelle (10), umfassend eine mikroporöse Region A (2), ein Elektrodenbasismaterial (1) und eine mikroporöse Region B (3), die in der genannten Reihenfolge angeordnet sind, wobei die mikroporöse Region B (3) ein Flächenverhältnis in dem Bereich von 80 bis 100 % aufweist,
    die mikroporöse Region A (2) hydrophobes Harz und kohlenstoffhaltiges Pulver umfasst, und
    die mikroporöse Region B (3) hydrophobes Harz und kohlenstoffhaltiges Pulver umfasst,
    **dadurch gekennzeichnet, dass**
    die mikroporöse Region A (2) ein Flächenverhältnis in dem Bereich von 20 bis 70 % aufweist;
    die Dicke von dem Elektrodenbasismaterial (1) 70 bis 160 $\mu$m beträgt,
    die Dichte von dem Elektrodenbasismaterial (1) in dem Bereich von 0,24 bis 0,3 g/cm$^3$ liegt, und
    sich der Begriff "Flächenverhältnis", wie er hier verwendet wird, auf einen Anteil (%) von der Fläche bezieht, die mit den entsprechenden mikroporösen Regionen (2, 3) in Bezug auf die Fläche des Elektrodenbasismaterials (1) auf einer Seite des Gasdiffusionsmediums (5) bedeckt ist, berechnet durch die nachstehende Gleichung:

    $$\text{Flächenverhältnis (\%)} = \text{Fläche, die mit mikroporöser Region bedeckt ist} / \text{Fläche des Elektrodenbasismaterial} \times 100.$$

2.  Gasdiffusionsmedium für eine Brennstoffzelle nach Anspruch 1, wobei die mikroporöse Region A (2) ein Muster bildet, wobei sich ein Muster auf ein Ausgestaltung bezieht, die innerhalb eines Bereichs von 100 cm$^2$ oder kleiner wiederholt wird.

3.  Gasdiffusionsmedium für eine Brennstoffzelle nach Anspruch 1 oder 2, wobei die mikroporöse Region A (2) aus einem Aggregat aus linearen, mikroporösen Regionen gebildet ist, die eine mittlere Linienbreite von 0,1 bis 5 mm aufweisen.

4.  Gasdiffusionsmedium für eine Brennstoffzelle nach einem der Ansprüche 1 bis 3, wobei die mikroporöse Region A (2) streifenförmig oder gitterförmig ist.

5.  Verfahren zum Herstellen von dem Gasdiffusionsmedium (5) für eine Brennstoffzelle (10) nach einem der Ansprüche 1 bis 4, wobei die mikroporöse Region A (2) durch Siebdruck oder Tiefdruck gebildet wird.

6.  Membranelektrodenanordnung (8), umfassend eine Katalysatorschicht (7) an beiden Seiten von einer Elektrolytmembran (6) und ein Gasdiffusionsmedium (5) an der äußeren Seite der Katalysatorschichten (7), wobei mindestens eines von den Gasdiffusionsmedien das Gasdiffusionsmedium nach einem der Ansprüche 1 bis 4 ist.

7.  Membranlektrodenanordnung nach Anspruch 6, wobei die mikroporöse Region B (3) von dem Gasdiffusionsmedium (5) mit der Katalysatorschicht (7) in Kontakt steht.

8.  Brennstoffzelle (10), umfassend an beiden Seiten von der Membranelektrodenanordnung (8) nach Anspruch 7 eine bipolare Platte (9).

**Revendications**

1.  Milieu de diffusion de gaz (5) pour une pile à combustible (10), comprenant a région microporeuse A (2), un matériau de base d'électrode (1) et une région microporeuse B (3)
    qui sont agencés dans l'ordre mentionné, dans lequel
    ladite région microporeuse B (3) présente un rapport d'aire dans la plage de 80 à 100 %, la région microporeuse A (2) comprend une résine hydrophobe et une poudre carbonée, et
    la région microporeuse B (3) comprend une résine hydrophobe et une poudre carbonée, **caractérisé en ce que**
    ladite région microporeuse A (2) présente un rapport d'aire dans la plage de 20 à 70 % ; l'épaisseur du matériau de base d'électrode (1) est de 70 à 160 $\mu$m,
    la masse volumique du matériau de base d'électrode (1) est dans la plage de 0,24 à 0,3 g/cm$^3$, et
    le terme « rapport d'aire » présentement utilisé désigne une proportion (%) de l'aire recouverte par les régions microporeuses respectives (2, 3) par rapport à l'aire du matériau de base d'électrode (1) sur un côté du milieu de diffusion de gaz (5), calculé par l'équation suivante :

Rapport d'aire (%) = Aire recouverte par une région microporeuse/Aire de matériau de base d'électrode * 100.

2. Milieu de diffusion de gaz pour une pile à combustible selon la revendication 1, dans lequel ladite région microporeuse A (2) forme un motif, un motif désignant un modèle qui est répété dans une aire de 100 cm$^2$ ou moins.

3. Milieu de diffusion de gaz pour une pile à combustible selon la revendication 1 ou 2, dans lequel ladite région microporeuse A (2) est composée d'un agrégat de régions microporeuses linéaires ayant une largeur de ligne moyenne de 0,1 à 5 mm.

4. Milieu de diffusion de gaz pour une pile à combustible selon l'une quelconque des revendications 1 à 3, dans lequel ladite région microporeuse A (2) est en forme de bande ou en forme de grille.

5. Procédé de production du milieu de diffusion de gaz (5) pour une pile à combustible (10) selon l'une quelconque des revendications 1 à 4, dans lequel ladite région microporeuse A (2) est formée par sérigraphie ou héliogravure.

6. Ensemble d'électrode à membrane (8), comprenant une couche de catalyseur (7) sur les deux côtés d'une membrane d'électrolyte (6) et un milieu de diffusion de gaz (5) sur le côté externe desdites couches de catalyseur (7), dans lequel au moins un desdits milieux de diffusion de gaz est le milieu de diffusion de gaz selon l'une quelconque des revendications 1 à 4.

7. Ensemble d'électrode à membrane selon la revendication 6, dans lequel ladite région microporeuse B (3) dudit milieu de diffusion de gaz (5) est en contact avec ladite couche de catalyseur (7).

8. Pile à combustible (10), comprenant une plaque bipolaire (9) sur les deux côtés de l'ensemble d'électrode à membrane (8) selon la revendication 7.

Fig.1

Fig.2

Fig.3

Fig.4

**Fig.5**

**Fig.6**

Fig.7

Fig.8

**Fig.9**

**Fig.10**

**Fig.11**

**Fig.12**

**Fig.13**

**Fig.14**

**Fig.15**

**Fig.16**

**Fig.17**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000123842 A
- JP H9245800 A
- JP 2008293937 A
- JP 2004164903 A
- US 2007048593 A1